# EUROPEAN PATENT APPLICATION

(11) **EP 4 746 078 A1**
(43) Date of publication of application: **20.05.2026**
(21) Application number: 25215945.4
(22) Date of filing: 14.11.2025
(51) Int. Cl.: H01M 4/62, H01M 4/525, H01M 4/36, H01M 4/1391, H01M 4/04

(54) **POSITIVE ELECTRODE ACTIVE MATERIALS, POSITIVE ELECTRODES, RECHARGEABLE LITHIUM BATTERIES, AND METHODS OF PREPARING POSITIVE ELECTRODE ACTIVE MATERIALS**

(30) Priority: 15.11.2024 KR 20240163541
(71) Applicant: Samsung SDI Co., Ltd., Yongin-si, Gyeonggi-do 17084 (KR); POSTECH Research and Business Development Foundation, Pohang-si, Gyeongsangbuk-do 37673 (KR)
(72) Inventor: SHIN, Dongwook, 17084 Yongin-si (KR); LEE, Soonrewl, 17084 Yongin-si (KR); PARK, Kyu-Young, 37673 Pohang-si (KR); PARK, Seongeun, 37673 Pohang-si (KR); LIM, Jong-Heon, 37673 Pohang-si (KR)
(74) Representative: Marks & Clerk LLP

(57) **Abstract**

The present application provides a positive electrode active material, a positive electrode, a rechargeable lithium battery, and a method of preparing a positive electrode active material. The positive electrode active material includes a lithium nickel-based composite oxide in a form of secondary particles in which a plurality of primary particles is agglomerated and a coating layer on a surface of one or more of the secondary particles and including a cellulose derivative and a carbon nanotube. The carbon nanotube in the coating layer is randomly arranged on the surface of the one or more of the secondary particles and connects between the primary particles. A residual lithium content on a surface of the positive electrode active material is less than or equal to about 1.5 wt%. A pH of the surface of the positive electrode active material is about 10 to about 12.

## Description

### BACKGROUND

### 1. Field

The present disclosure relates to positive electrode active materials, positive electrodes, rechargeable lithium batteries, and methods of preparing positive electrode active materials.

This patent is related to research conducted with the support of the Korea Institute for Advancement of Technology (RS-2024-00419413, 2024 Industrial Innovation Talent Growth Support Project) with funding from the government (Ministry of Trade, Industry and Energy) in 2024.

### 2. Description of the Related Art

A portable information device such as a cellphone, a laptop, smartphone, and the like or an electric vehicle may use a rechargeable lithium battery having high energy density and having easy portability as a driving power source. Recently, research has been actively conducted to use a rechargeable lithium battery with high energy density as a driving power source for hybrid or electric vehicles or as a power storage power source.

Various positive electrode active materials have been investigated to invent rechargeable lithium batteries for applications as a driving power source for hybrid or electric vehicles or as a power storage power source. Among them, lithium nickel-based oxide, lithium nickel manganese cobalt-based composite oxide, lithium nickel cobalt aluminium-based composite oxide, and lithium cobalt-based oxide are mainly used as positive electrode active materials. High-nickel positive electrode active materials with a nickel content of approximately 80 mol% or more can realize high energy density and have been actively developed recently. However, due to unstable surface characteristics and the use of excessive lithium precursors during synthesis, surface residual lithium may be generated when using high-nickel positive electrode active materials with a nickel content of approximately 80 mol% or more, which can cause problems such as slurry gelation and excessive gas generation during the electrode manufacturing process. In addition, there are limitations that accompany various problems such as structural deterioration due to charging and discharging, surface side reactions with the electrolyte, and deterioration due to particle cracks. Accordingly, development of a positive electrode active material that effectively removes residual lithium while realizing high energy density and long cycle-life characteristics is required.

### SUMMARY

Some embodiments provide a positive electrode active material, a positive electrode, a rechargeable lithium battery, and a method of preparing a positive electrode active material, wherein by performing a washing process and a coating process simultaneously, the process may be unified and preparing costs may be reduced. Further, by removing residual lithium, slurry gelation and gas generation may be suppressed, and at the same time, by suppressing a structural deterioration and particle cracks of the positive electrode active material that can occur during repeated charge and discharge through carbon nanotube coating, structural stability may be secured. At the same time, a high capacity, a high energy density, and long cycle-life characteristics may be implemented for the rechargeable lithium battery.

Some embodiments of the present disclosure provide a positive electrode active material, which includes a lithium nickel-based composite oxide in a form of secondary particles in which a plurality of primary particles is agglomerated and a coating layer on a surface of one or more of the secondary particles and including a cellulose derivative and a carbon nanotube. The carbon nanotube in the coating layer is randomly arranged on the surface of the one or more of the secondary particles and connects between the primary particles. A residual lithium content on a surface of the positive electrode active material is less than or equal to about 1.5 wt%. A pH of the surface of the positive electrode active material is about 10 to about 12.

In some embodiments, the lithium nickel-based composite oxide may be represented by Chemical Formula 1: Liₐ₁Niₓ₁M¹_{y1}M²_{z1}O_{2-b1}X_{b1}. In Chemical Formula 1, 0.9≤a1≤1.2, 0.8≤x1<1, 0<y1≤0.2, 0≤z1≤0.2, 0.9≤x1+y1+z1≤1.1, and 0≤b1≤0.1. M¹ and M² may be each independently one or more elements selected from Al, B, Ba, Ca, Ce, Co, Cr, Cu, Fe, Mg, Mn, Mo, Nb, Si, Sn, Sr, Ti, V, W, Y, Zn, and Zr. X may be one or more elements selected from F, P, and S.

In some embodiments, in the lithium nickel-based composite oxide, a nickel content based on 100 mol% of a total metal, excluding lithium, may be greater than or equal to about 80 mol%.

In some embodiments, an average particle diameter D₅₀ of the secondary particles may be from about 2 µm to about 20 µm. An average particle diameter D₅₀ of the primary particles may be less than or equal to about 6 µm.

In some embodiments, the cellulose derivative may be disposed between the lithium nickel-based composite oxide and the carbon nanotube.

In some embodiments, the cellulose derivative may include ethyl cellulose, cellulose acetate, carboxylmethyl cellulose, hydroxypropyl cellulose, methyl cellulose, nitrocellulose, or a combination thereof.

In some embodiments, the cellulose derivative may be included in an amount from about 0.005 wt% to about 50 wt% based on 100 wt% of the positive electrode active material. The cellulose derivative may be included in an amount of about 0.5 wt% to 90 wt% based on 100 wt% of the coating layer.

In some embodiments, the coating layer may further include amorphous carbon. The amorphous carbon may include a carbide of the cellulose derivative. The carbide of the cellulose derivative may include a carbide of ethyl cellulose, a carbide of cellulose acetate, a carbide of carboxymethyl cellulose, a carbide of hydroxypropyl cellulose, a carbide of methyl cellulose, a carbide of nitrocellulose, or a combination thereof.

In some embodiments, the amorphous carbon may be disposed between the lithium nickel-based composite oxide and the carbon nanotube.

In some embodiments, the carbon nanotube may include a single-walled carbon nanotube, a multi-walled carbon nanotube, or a combination thereof.

In some embodiments, an average diameter of the carbon nanotube may be from about 1 nm to about 50 nm. An average aspect ratio of the carbon nanotube may be from about 100 to about 50,000.

In some embodiments, the carbon nanotube may be included in an amount from about 0.01 wt% to about 10 wt% based on 100 wt% of the positive electrode active material. The carbon nanotube may be included in an amount from about 10 wt% to 99.5 wt% based on 100 wt% of the coating layer.

Some embodiments of the present disclosure provide a method of preparing a positive electrode active material. The method includes mixing a carbon nanotube, a cellulose-based dispersant, and a non-aqueous solvent to prepare a mixed solution; adding water to the mixed solution to form a Pickering emulsion; adding and mixing a lithium nickel-based composite oxide in a form of secondary particles in which primary particles are agglomerated into the Pickering emulsion to prepare a mixture; separating the lithium nickel-based composite oxide from the mixture; and performing a heat-treatment of the mixture.

In some embodiments, mixing the cellulose-based dispersant with the carbon nanotube and the non-aqueous solvent for preparing the mixed solution may include mixing ethyl cellulose, cellulose acetate, carboxymethyl cellulose, hydroxypropyl cellulose, methyl cellulose, nitrocellulose, or a combination thereof with the carbon nanotube and the non-aqueous solvent.

In some embodiments, mixing the non-aqueous solvent with the carbon nanotube and the cellulose-based dispersant for preparing the mixed solution may include mixing hexane, heptane, toluene, cyclohexane, isooctane, pentane, or a combination thereof with the carbon nanotube and the cellulose-based dispersant.

In some embodiments, in the method, adding the water to the mixed solution to form the Pickering emulsion includes forming the Pickering emulsion in a plurality of droplets, such that the carbon nanotube and the cellulose-based dispersant are located at an interface between an internal solvent of the droplets and an external solvent of the droplets, wherein the non-aqueous solvent is the external solvent, and the water is the internal solvent.

In some embodiments, in the method, when the adding and mixing the lithium nickel-based composite oxide to prepare the mixture, incorporating the lithium nickel-based composite oxide into the droplets of the Pickering emulsion, wherein the lithium nickel-based composite oxide incorporated into the droplets may be washed by the water inside the droplets.

In some embodiments, in the method, performing the heat treatment at a temperature from about 60 °C to about 800 °C under a vacuum or a predetermined gas atmosphere, the predetermined gas atmosphere including oxygen, argon, air, or nitrogen.

Some embodiments of the present disclosure provide a positive electrode, which includes a positive electrode current collector, a positive electrode active material layer disposed on the positive electrode current collector and including the positive electrode active material as described in the above embodiments

Some embodiments of the present disclosure provide a rechargeable lithium battery, which includes a positive electrode including the positive electrode active material as described in the above embodiments, a negative electrode, and an electrolyte.

At least some of the above and other features of the invention are set out in the claims.

### BRIEF DESCRIPTION OF THE DRAWINGS

FIGS. 1 to 4 are views schematically showing rechargeable lithium batteries according to some embodiments of the present disclosure.
FIG. 5 is a field emission scanning electron microscope (FE-SEM) photograph of surfaces of positive electrode active material particles of Example 1 according to some embodiments of the present disclosure.
FIG. 6 is a field emission scanning electron microscope (FE-SEM) photograph of surfaces of a positive electrode active material particle of Comparative Example 1 according to some embodiments of the present disclosure.
FIG. 7 is a field emission scanning electron microscope (FE-SEM) photograph of surfaces of positive electrode active material particles of Comparative Example 2 according to some embodiments of the present disclosure.
FIG. 8 is a field emission scanning electron microscope (FE-SEM) photograph of surfaces of positive electrode active material particles of Comparative Example 3 according to some embodiments of the present disclosure.
FIG. 9 is a graph according to high resolution X-ray powder diffraction (HRPD) values for the positive electrode active materials of Example 1, Comparative Example 1, and Comparative Example 2 according to some embodiments of the present disclosure.
FIG. 10 is an X-ray photoelectron spectroscopy (XPS) surface analysis graph for the positive electrode active material of Example 1 according to some embodiments of the present disclosure.
FIG. 11 is an X-ray photoelectron spectroscopy (XPS) surface analysis graph for the positive electrode active material of Comparative Example 1 according to some embodiments of the present disclosure.
FIG. 12 shows results of measuring a pH of water before and after a coating process of the positive electrode active material of Example 1 according to some embodiments of the present disclosure.
FIG. 13 shows the results of measuring a pH of the positive electrode active materials prepared in Example 1, Comparative Example 1, and Comparative Example 3 according to some embodiments of the present disclosure.
FIG. 14 is a titration curve graph obtained during a titration analysis process of measuring residual lithium content on surfaces of the positive electrode active materials of Example 1, Comparative Example 1, and Comparative Example 2 according to some embodiments of the present disclosure.
FIG. 15 shows results of residual lithium content obtained by substituting equivalence points determined from titration curves of Example 1, Comparative Example 1, and Comparative Example 2 into a relevant calculation formula according to some embodiments of the present disclosure.
FIG. 16 is a charge/discharge curve graph of a first activation process cycle (formation cycle) of Example 1, Comparative Example 1, and Comparative Example 2 at a rate of 0.1C according to some embodiments of the present disclosure.
FIG. 17 is a graph showing an evaluation of cycle-life characteristics of Example 1, Comparative Example 1, and Comparative Example 2 at a rate of 1C for 200 cycles according to some embodiments of the present disclosure.
FIG. 18 shows electrochemical impedance spectroscopy (EIS) results for Example 1, Comparative Example 1, and Comparative Example 2 after an activation process according to some embodiments of the present disclosure.
FIG. 19 shows electrochemical impedance spectroscopy (EIS) results for Example 1, Comparative Example 1, and Comparative Example 2 after 50 cycles according to some embodiments of the present disclosure.
FIG. 20 is an X-ray nano-tomography (TXM) image of Example 1 before a charge/discharge experiment according to some embodiments of the present disclosure.
FIG. 21 is an X-ray nano-tomography (TXM) image of Example 1 after 200 cycles according to some embodiments of the present disclosure.
FIG. 22 is an X-ray nano-tomography (TXM) image of Comparative Example 2 before a charge/discharge experiment according to some embodiments of the present disclosure.
FIG. 23 is an X-ray nano-tomography (TXM) image of Comparative Example 2 after 200 cycles according to some embodiments of the present disclosure.

### DETAILED DESCRIPTION

Hereinafter, specific embodiments will be described in detail so that those of ordinary skill in the art can easily implement them. However, this disclosure may be embodied in many different forms and is not construed as limited to embodiments set forth herein.

The terminology used herein is used to describe embodiments only and is not intended to limit the present disclosure. The singular expression includes the plural expression unless the context clearly dictates otherwise.

As used herein, "combination thereof" means a mixture, a laminate, a composite, a copolymer, an alloy, a blend, a reaction product, and the like of the constituents.

It should be understood that terms such as "comprises," "includes," or "have" are intended to designate the presence of an embodied feature, number, step, element, or a combination thereof, but it does not preclude the possibility of the presence or addition of one or more other features, numbers, steps, elements, or a combination thereof.

In the drawings, the thickness of layers, films, panels, regions, etc., are exaggerated for clarity and like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

In addition, "layer" herein includes not only a shape formed on the whole surface when viewed from a plan view, but also a shape formed on a partial surface.

The average particle diameter may be measured by a method well known to those skilled in the art, for example, by a particle size analyzer, or by a transmission electron microscope image or a scanning electron microscope image. Alternatively, it is possible to obtain an average particle diameter value by measuring using a dynamic light scattering method, performing data analysis, counting the number of particles for each particle size range, and calculating from this. Unless otherwise defined, the average particle diameter (D₅₀) may mean the diameter of particles having a cumulative volume of 50% volume in the particle size distribution. As used herein, when a definition is not otherwise provided, the average particle diameter (D₅₀) means a diameter of particles having a cumulative volume of 50% volume in the particle size distribution that is obtained by measuring the size (diameter or major axis length) of about 20 particles at random in a scanning electron microscope image.

"Or" is not to be construed as an exclusive meaning, for example, "A or B" is construed to include A, B, A+B, and the like.

"Metal" is interpreted as a concept including ordinary metals, transition metals, and metalloids (semi-metals).

### Positive Electrode Active Material

In some embodiments, a positive electrode active material includes a lithium nickel-based composite oxide in a form of secondary particles in which a plurality of primary particles are agglomerated and a coating layer on a surface of one or more of the secondary particle and including a cellulose derivative and a carbon nanotube, wherein the carbon nanotube in the coating layer is randomly arranged on the surface of the one or more of the secondary particles and connects between the primary particles, a residual lithium content on the surface of the positive electrode active material is less than or equal to about 1.5 wt%, and a pH of the surface of the positive electrode active material is about 10 to about 12.

Lithium nickel-based composite oxides may generally have a secondary particle form in which a plurality of primary particles are agglomerated. These lithium nickel-based composite oxides have an excessive residual lithium content in their crystal structures, which causes gelation of the slurry, gas generation due to side reactions with the electrolyte, and deterioration of the cycle-life when applied to rechargeable lithium batteries.

In addition, as the charge and discharge cycles progress, the lithium nickel-based composite oxide experiences repeated volume change of the crystal structure, which causes gaps between the primary particles to widen, thereby misaligning the arrangement of the primary particles. This causes a large difference in a degree of shrinkage and expansion of the secondary particles and a shrinkage and expansion of the positive electrode including the same. This causes structural cracking and destruction of secondary particles and the positive electrode, induces disconnection of the electrochemical charge transfer network, causes charge imbalance, increases an area for side reactions with an electrolyte, and causes deterioration of repeated charge/discharge cycle-life.

First, in order to remove the residual lithium, several methods have been proposed, and among them, a method of washing the positive electrode active material with a solvent such as ethanol or water is the most common. The ethanol washing has an advantage of preventing surface damages of the positive electrode active material but needs a total mixing time of up to about 48 hours due to low residual lithium solubility (about 2.36 g/100 g in anhydrous ethanol at about 20 °C), which significantly increases time and cost. Alternatively, there are surface coating technologies such as a phosphate salt treatment that converts the residual lithium on the surface into Li₃PO₄ and the like, which also take a lot of time and cost. However, water washing (hereinafter, the same as a washing process) has an advantage of being fast and relatively inexpensive due to a high solubility of the residual lithium and thus is widely being used.

On the other hand, in order to suppress the repeated volume changes of the crystal structure as charge/discharge cycles progress, several methods have been proposed, and among them, technologies of coating a carbon-based material on the surface of a lithium nickel-based composite oxide are known. Among the technologies, a graphene coating technology is known but may cover the entire surface of a positive electrode active material due to its unique characteristics and, thus, hinder a lithium-ion movement between a positive electrode active material surface and an electrolyte, resultantly deteriorating high-capacity, high-power, and long cycle-life characteristics.

The positive electrode active material according to some embodiments is treated with a washing process to remove residual lithium on a surface of a lithium nickel-based composite oxide, thereby suppressing gelation in a positive electrode slurry and generation of gas due to a side reaction with an electrolyte. Simultaneously, the positive electrode active material according to some embodiments is coated with a carbon nanotube so as not to cover the entire surface of the lithium nickel-based composite oxide, unlike graphene. This solves the problem of hindering the lithium-ion movement between positive electrode active material surface and electrolyte. This also prevents misalignment of primary particles such as gaps produced between the primary particles according to charging and discharging (while connecting the primary particles by the carbon nanotube, to maintain a secondary particle shape) and suppresses contraction and expansion of the secondary particles and a positive electrode to resultantly improve battery cycle-life characteristics.

The residual lithium content on the surface of the positive electrode active material is less than or equal to about 1.5 wt%, and a pH of the surface of the positive electrode active material is about 10 to about 12.

The residual lithium content on the surface of the positive electrode active material may be, for example, less than or equal to about 1.0 wt%, less than or equal to about 0.5 wt%, or less than or equal to about 0.3 wt%. The residual lithium content on the surface of the above positive electrode active material may be measured by acid-base titration method (Warder method). The acid-base titration method is performed by dissolving the positive electrode active material in water, adding 0.05 M hydrochloric acid (HCl) to the filtered solution using a Karl-Fischer titrator, until a pH thereof became a specific value, and analyzing the obtained titration curve. An equivalence point in the obtained titration curve is substituted into a related calculation formula to calculate a residual lithium content. When the residual lithium content on the surface of the positive electrode active material satisfies the above range, slurry gelation may be suppressed during the positive electrode manufacturing process, thereby maintaining the thickness of the positive electrode uniformly during the slurry coating process. In addition, by alleviating side reactions with the electrolyte during the battery operation process, a generation of gases such as CO, CO₂, and O₂ is reduced, which can suppress battery expansion and increase in internal cell pressure, and as a result, long-term stability can be secured. On the other hand, if the residual lithium content on the surface of the positive electrode active material exceeds the above range, the pH in the positive electrode slurry increases, promoting crosslinking of the binder included in the slurry and causing slurry gelation, which may lead to instability in the positive electrode manufacturing process. In addition, the side reaction between the positive electrode active material and the electrolyte is promoted, which increases the amount of gas generated, generates hydrofluoric acid (HF), and promotes the dissolution of the transition metal of the positive electrode, and thus may have a negative impact on the stability and the cycle-life of the battery.

Additionally, a pH of the surface of the positive electrode active material may be, for example, about 10 to about 11.9, or about 10 to about 11.85. The pH of the surface of the positive electrode active material may be measured according to a pH meter measurement method. Specifically, the pH may be measured by immersing a pH meter electrode in a filtered solution in which the positive electrode active material is dissolved in water and then maintained for 200 seconds. When the pH of the surface of the positive electrode active material satisfies the above range, slurry gelation may be suppressed during the positive electrode manufacturing process, and thus the thickness of the positive electrode may be formed uniformly. In addition, by alleviating side reactions with the electrolyte during the battery operation process, the generation of gases such as CO, CO₂, and O₂ is reduced, which can suppress battery expansion and increase in internal cell pressure, and as a result, long-term stability can be secured. In addition, a higher pH value means a higher residual lithium content on the surface of the positive electrode active material, and if the pH exceeds the above range, a side reaction between the positive electrode active material and the electrolyte is promoted during battery operation, which increases the amount of gas generated and generates hydrofluoric acid (HF), which promotes the dissolution of the transition metal of the positive electrode, which may negatively affect the stability and cycle-life of the battery.

### Lithium Nickel-based Composite Oxide

The lithium nickel-based composite oxide may be, for example, represented by Chemical Formula 1.

[Chemical Formula 1] Liₐ₁Niₓ₁M¹_{y1}M²_{z1}O_{2-b1}X_{b1}

In Chemical Formula 1, 0.9≤a1≤1.2, 0.8≤x1<1, 0<y1≤0.2, 0≤z1≤0.2, 0.9≤x1+y1+z1≤1.1, and 0≤b1≤0.1, M¹ and M² are each independently one or more elements selected from Al, B, Ba, Ca, Ce, Co, Cr, Cu, Fe, Mg, Mn, Mo, Nb, Si, Sn, Sr, Ti, V, W, Y, Zn, and Zr, and X is one or more elements selected from F, P, and S. M¹ and M² may be different elements.

In Chemical Formula 1, for example, 0.85≤x1<1, 0<y1≤0.15, and 0≤z1≤0.15; or 0.9≤x1<1, 0<y1≤0.1, and 0≤z1≤0.1.

The lithium nickel-based composite oxide may be represented by the Chemical Formula 2 or Chemical Formula 3.

[Chemical Formula 2] Liₐ₂Niₓ₂CO_{y2}M³_{z2}O_{2-b2}X_{b2}

In Chemical Formula 2, 0.9≤a2≤1.2, 0.8≤x2<1, 0<y2≤0.2, 0≤z2≤0.2, 0.9≤x2+y2+z2≤1.1, and 0≤b2≤0.1, M³ is one or more elements selected from Al, B, Ba, Ca, Ce, Cr, Cu, Fe, Mg, Mn, Mo, Nb, Si, Sn, Sr, Ti, V, W, Y, Zn, and Zr, and X is F, P, S, or a combination thereof.

In Chemical Formula 2, for example, 0.9≤x2≤0.99, 0.01≤y2≤0.1, and 0≤z2≤0.1.

[Chemical Formula 3] Liₐ₃Niₓ₃Co_{y3}M⁴_{z3}M⁵_{w3}O_{2-b3}X_{b3}

In Chemical Formula 3, 0.9≤a3≤1.2, 0.8≤x3≤0.98, 0.01≤y3≤0.19, 0.01≤z3≤0.19, 0≤w3≤0.19, 0.9≤x3+y3+z3+w3≤1.1, and 0≤b3≤0.1, M⁴ is Al, Mn, or a combination thereof, M⁵ is one or more elements selected from B, Ba, Ca, Ce, Cr, Cu, Fe, Mg, Mo, Nb, Si, Sn, Sr, Ti, V, W, Y, Zn, and Zr, and X is F, P, S or a combination thereof.

In Chemical Formula 3, for example, 0.9≤x3≤0.98, 0.01≤y3≤0.09, 0.01≤z3≤0.09, and 0≤w3≤0.09.

In the lithium nickel-based composite oxide, a nickel content based on 100 mol% of the total metal excluding lithium may be greater than or equal to about 80 mol%, for example, greater than or equal to about 85 mol%, greater than or equal to about 90 mol%, greater than or equal to about 91 mol%, greater than or equal to about 94 mol%, and less than or equal to about 99 mol%. When the nickel content satisfies the above range, high capacity and high energy density may be achieved.

The lithium nickel-based composite oxide is in a form of secondary particles in which a plurality of primary particles is agglomerated. The secondary particles may be spherical, elliptical, polyhedral, or irregular in shape, and the primary particles may be spherical, elliptical, plate-shaped, or a combination thereof.

The average particle diameter (D₅₀) of the secondary particles of the lithium nickel-based composite oxide may be from about 2 µm to about 20 µm, for example, from about 4 µm to about 20 µm, or from about 6 µm to about 20 µm. The average particle diameter (D₅₀) may be obtained by randomly measuring a size (i.e., diameter or major axis length) of about 20 particles from a scanning electron microscope image of lithium nickel-based composite oxide particles to obtain a particle size distribution, and taking the diameter of particles having a cumulative volume of 50% volume from the particle size distribution as the average particle diameter.

The average particle diameter (D₅₀) of the primary particles forming the secondary particles of the lithium nickel-based composite oxide may be less than or equal to about 6 µm, for example, from about 100 nm to about 4 µm, from about 100 nm to about 2 µm, from about 200 nm to about 800 nm, or from about 300 nm to about 700 nm. The average particle diameter of the primary particles may be obtained by randomly measuring the size (diameter or major axis length) of about 20 primary particles from a scanning electron microscope or transmission electron microscope image of the surface of the secondary particles to obtain a particle size distribution, and taking the diameter of particles having a cumulative volume of 50% volume from the particle size distribution as the average particle diameter. When the average particle diameter of the primary particles satisfies the above range, the positive electrode active material can realize high initial charge/discharge capacity and efficiency and excellent output characteristics and life characteristics.

### Coating Layer

A coating layer according to some embodiments includes a cellulose derivative and carbon nanotube.

The cellulose derivative may include an alkyl group, but the cellulose derivative is not limited thereto, as long as the cellulose derivative includes a functional group capable of forming a hydrogen bond. The cellulose derivative may include ethyl cellulose, acetic acid cellulose (i.e. cellulose acetate), carboxylmethyl cellulose, hydroxypropyl cellulose, methyl cellulose, nitrocellulose, or a combination thereof.

The cellulose derivative may be disposed between the lithium nickel-based composite oxide and the carbon nanotube. The cellulose derivative may be disposed between the secondary particle of the lithium nickel-based composite oxide and the carbon nanotube, and, specifically, the cellulose derivative may be disposed between the primary particles on the surface of the secondary particle and the carbon nanotube. The primary particles on the surface of the secondary particle and the carbon nanotube may be attached to each other through the cellulose derivative. The cellulose derivative may play a role in maintaining the shape of secondary particles and suppressing shrinkage and expansion of the positive electrode by enabling the carbon nanotube to be attached to the surface of a lithium nickel-based composite oxide.

The cellulose derivative in the coating layer may be included in an amount from about 0.005 wt% to about 50 wt%, for example, from about 0.05 wt% to about 40 wt%, from about 0.1 wt% to about 30 wt%, or from about 0.2 wt% to about 20 wt% based on 100 wt% of the positive electrode active material. Additionally, the cellulose derivative may be included in an amount from about 0.5 wt% to about 90 wt%, for example, from about 10 wt% to about 85 wt%, from about 20 wt% to about 80 wt%, or from about 30 wt% to about 70 wt% based on 100 wt% of the coating layer. An amount (wt%) of the cellulose derivative may be measured by thermal decomposition analysis, for example, by using a thermogravimetric analyzer (TGA) or a differential scanning calorimeter (DSC). For example, the TGA analysis may be performed in an air atmosphere while heating from room temperature to about 800°C at a heating rate of 10°C/min, and the thermal decomposition behavior of the cellulose derivative may be identified by measuring changes in the sample mass as a function of temperature. The cellulose derivative, for example, ethyl cellulose, exhibits a thermal decomposition behavior around 240°C; therefore, the content of the cellulose derivative may be calculated based on the mass loss occurring in that temperature range (for example, from about 200°C to about 350°C). In addition to the thermal decomposition analysis, the content of the cellulose derivative may also be determined by a solvent extraction method. For example, a solvent capable of dissolving the cellulose derivative (for example, acetonitrile, ethanol, methanol, toluene, acetone, ethyl acetate, or xylene) may be used to immerse the positive electrode active material so that the cellulose derivative in the coating layer is selectively dissolved and removed. The content of the cellulose derivative in the coating layer may then be calculated based on the decrease in the mass of the remaining solid or the solid content of the cellulose derivative dissolved in the solution. When direct separation and analysis of the coating layer is difficult, the thickness and volume ratio of the coating layer may be evaluated by electron microscopy (TEM, SEM) or focused ion beam (FIB) cross-sectional analysis, and the content of the cellulose derivative may be corrected based on the mass ratio of the coating layer to the total positive electrode active material. In addition, DSC analysis may be performed in combination to clearly identify the temperature at which thermal decomposition peaks occur, thereby improving measurement accuracy by correlating the mass loss region in the TGA curve with the decomposition temperature of the cellulose derivative. In one example, the content of the cellulose derivative may be measured using a thermogravimetric analyzer (TGA).

The coating layer may further include amorphous carbon. The amorphous carbon is carbon that has no crystallinity or very low crystallinity and is distinguished from crystalline carbon (e.g., graphitic carbon). The amorphous carbon may include a carbide of a cellulose derivative. The carbide of the cellulose derivative is an amorphous carbon material formed when a cellulose derivative undergoes a heat treatment or carbonization process depending on the heat treatment temperature described below. The type of the carbide of the cellulose derivative is not limited as long as it includes an alkyl group and a functional group capable of forming a hydrogen bond. The carbide of the cellulose derivative may include a carbide of ethyl cellulose, a carbide of cellulose acetate, a carbide of carboxymethyl cellulose, a carbide of hydroxypropyl cellulose, a carbide of methyl cellulose, a carbide of nitrocellulose, or a combination thereof.

The amorphous carbon may be positioned along with the cellulose derivative between the lithium nickel-based composite oxide and the carbon nanotube. The amorphous carbon may be positioned between secondary particles of the lithium nickel-based composite oxide and the carbon nanotube and, specifically, between primary particles on the surface the secondary particles and the carbon nanotube. The primary particles on the surface of the secondary particles and the carbon nanotube may be adhered to each other through the amorphous carbon. The amorphous carbon is positioned along with the cellulose derivative between lithium nickel-based composite oxide and carbon nanotube and may serve as an adhesive for adhering the carbon nanotube onto the surface of the lithium nickel-based composite oxide, so that the carbon nanotube may not only be more firmly adhered to the lithium nickel-based composite oxide but may also maintain the secondary particle shape and may suppress a contraction and an expansion of the secondary particle and the positive electrode.

The coating layer according to some embodiments includes a carbon nanotube. When graphene is coated by using known graphene coating technology, the graphene, which is a 2D material, may cover the entire surface of the lithium nickel-based composite oxide to hinder the lithium-ion movement between positive electrode active material surface and electrolyte, thereby deteriorating high-capacity, high-power, and long- cycle-life characteristics. However, the carbon nanotube, which is a 1D material, interconnects the primary particles on the lithium nickel-based composite oxide surface and does not cover the entire surface of lithium nickel-based composite oxide unlike the graphene and, thus, may not only hinder the lithium ions but may also maintain the secondary particle shape and may also suppress the contraction and the expansion of the secondary particles and the positive electrode, improving battery- cycle-life characteristics.

The carbon nanotube is randomly aligned on the secondary particle surface of the lithium nickel-based composite oxide, wherein the carbon nanotube connecting the primary particles may exist in a 3-dimensional net shape, a spider web shape, or a like shape on the secondary particle surface.

The carbon nanotube may be provided in a form that interconnects primary particles forming the secondary particles on the surface of the secondary particles, and the amorphous carbon may be disposed between the carbon nanotube and the secondary particles and act as a type of adhesive. The primary particle located on the surface of the secondary particle and the carbon nanotube may be bonded to each other through an amorphous carbon.

The carbon nanotube is a highly crystalline carbon material in which carbon atoms are arranged in a hexagonal arrangement to form a tube shape and has excellent electrical conductivity and lithium ionic conductivity. Therefore, cycle characteristics of the rechargeable lithium battery may be significantly improved by maintaining current and voltage distribution within the positive electrode uniformly during the charge and discharge cycle, and output characteristics of the battery may be improved due to improved conductivity. In addition, because the carbon nanotube is made up of carbon atoms with strong covalent bonds, they have excellent tensile strength and high resistance to destruction and, thus, can greatly improve battery safety.

The carbon nanotube in the coating layer may be provided independently in the form of a single fiber or a bundle of fibers and may be provided in a form that is connected through some point contact or point surface. Additionally, carbon nanotubes adjacent to each other within the coating layer may be spaced apart from each other. The carbon nanotube in the coating layer is arranged so as to have some space within the coating layer, so that lithium ions can move freely between the surface of the positive electrode active material and the electrolyte, thereby enabling the implementation of high capacity, high output, and long cycle-life characteristics.

The ratio of the area occupied by the carbon nanotube relative to the total area of the secondary particle surface of the positive electrode active material (the ratio of the area of the carbon nanotube relative to the total area of the coating layer) may be from about 1% to about 80%, for example, from about 35% to about 75%, from about 40% to about 70%, or from about 45% to about 65%. The ratio of the area of the carbon nanotube relative to the total surface area of the secondary particles may be measured, for example, by measuring the area of the secondary particles using an image program such as Image J in a scanning electron microscope image of the surface of secondary particles of the positive electrode active material, measuring the area of the region provided with the carbon nanotube, and calculating the ratio of the latter to the former. For more accurate measurements, analysis can be performed through threshold adjustment and binary conversion under the same brightness and contrast settings to maintain a clear distinction between the carbon nanotube and the background. When the ratio of the area of the carbon nanotube relative to the total area of the coating layer satisfies the above range, contact characteristics of the primary particles are prevented from deteriorating, such as a gap between the primary particles opening due to charge and discharge, without impeding the movement of lithium ions between the positive electrode active material and the electrolyte, thereby maintaining the secondary particle shape, and, at the same time, shrinkage and expansion of the secondary particles and the positive electrode can be suppressed, thereby improving the battery- cycle-life characteristics.

The carbon nanotube (CNT) may include single-walled carbon nanotube (SWCNT), a multi-walled carbon nanotube (MWCNT), or a combination thereof. When a multi-walled carbon nanotube is used as the carbon nanotube, the cost can usually be lower than when a single-walled carbon nanotube is used.

The carbon nanotube may include a bare carbon nanotube without surface treatment, a surface-treated carbon nanotube, or a combination thereof. The bare carbon nanotube refers to a carbon nanotube having surface functional groups (C-O, C-H, C-OOH, etc.) that generally exist on the surface of the carbon nanotube, and these functional groups are those that are produced during synthesis in the process of producing the carbon nanotube. The surface-treated carbon nanotube refers to carbon nanotube to which an additional functional group is attached by breaking and oxidizing the carbon ring structure on the surface of the carbon nanotube, more specifically, the surface of a bare carbon nanotube, using an acid such as nitric acid. These additional functional groups include carboxylic acid, amine, polyethylene glycol, etc., and the surface-treated carbon nanotube having these additional functional groups attached to it may include COOH functionalized CNT, amine functionalized CNT, and polyethylene glycol functionalized CNT. In the coating layer according to some embodiments, the carbon nanotube may include, without limitation, a bare carbon nanotube, a surface-treated carbon nanotube, etc.

The average diameter of the carbon nanotube may be from about 1 nm to about 50 nm, for example, from about 1 nm to about 40 nm, from about 1 nm to about 30 nm, from about 1 nm to about 20 nm, or from about 1 nm to about 10 nm. An average diameter of the carbon nanotube may be an average value of the diameter of a thickest part measured by observing 10 or more carbon nanotubes using a transmission electron microscope (TEM). When the average diameter of the carbon nanotube satisfies the above range, the mechanical properties of the coating layer can be enhanced by utilizing the elastic properties of the carbon nanotube.

The average aspect ratio of the carbon nanotube may be about 100 to about 50,000, for example, about 500 to about 40,000, about 5,000 to about 30,000, or about 10,000 to about 25,000. The average aspect ratio of the carbon nanotube is a ratio of the average length to the average diameter (average length/average diameter ratio). The average aspect ratio of the carbon nanotube may be calculated by measuring an average diameter and an average length and dividing the average length by the average diameter. The average diameter can be measured in the same manner as the above measurement method, and the average length may be an average value of the length measured by observing 10 or more carbon nanotubes using a scanning electron microscope (SEM). When the aspect ratio of the carbon nanotube satisfies the above range, the ratio of covering the surface of the positive electrode active material per carbon nanotube of the same weight can be increased, thereby providing an effect of coating an entire surface of the positive electrode active material.

The carbon nanotube may be included in an amount from about 0.01 wt% to about 10 wt%, for example, from about 0.05 wt% to about 10 wt%, from about 0.05 wt% to about 5 wt%, or from about 0.1 wt% to about 5 wt% based on 100 wt% of the positive electrode active material. Additionally, the carbon nanotube may be included in an amount from about 10 wt% to about 99.5 wt%, for example, from about 15 wt% to about 90 wt%, from about 20 wt% to about 80 wt%, or from about 30 wt% to about 70 wt% based on 100 wt% of the coating layer. An amount (wt%) of the carbon nanotube may be measured by thermal decomposition analysis, for example, by using a thermogravimetric analyzer (TGA) or a differential scanning calorimeter (DSC). For example, the TGA analysis may be performed in an air atmosphere while heating from room temperature to about 800°C at a heating rate of 10°C/min, and the thermal decomposition behavior of the carbon nanotube may be identified by measuring changes in the sample mass as a function of temperature. The carbon nanotube, for example, a multi-walled carbon nanotube, exhibits a thermal decomposition behavior around 600°C; therefore, the content of the carbon nanotube may be calculated based on the mass loss occurring in that temperature range (for example, from about 450°C to about 700°C). In addition to the thermal decomposition analysis, the content of the carbon nanotube may also be determined by a solvent extraction method or by separating the coating layer. For example, after dissolving and removing the cellulose derivative in the coating layer, the relative weight ratio of the carbon nanotube in the coating layer may be calculated by measuring the mass of the remaining solid. When direct separation and analysis of the coating layer is difficult, the thickness and volume ratio of the coating layer may be evaluated by electron microscopy (TEM, SEM) or focused ion beam (FIB) cross-sectional analysis, and the content of the carbon nanotube may be corrected based on the mass ratio of the coating layer to the total positive electrode active material. Furthermore, DSC analysis may be performed in combination to clearly identify the temperature at which thermal decomposition peaks occur, thereby improving measurement accuracy by correlating the mass loss region obtained from the TGA curve with the decomposition temperature of the carbon nanotube. In one example, the content of the carbon nanotube may be measured using a thermogravimetric analyzer (TGA).

The carbon nanotube according to some embodiments is used in a small amount compared to the amount of graphene in a known graphene coating, thereby further reducing the amount of a conductive material in the positive electrode compared to the graphene coating layer, which is advantageous in improving the energy density of the positive electrode and improving battery cycle-life characteristics.

According to some embodiments, a positive electrode active material includes the aforementioned lithium nickel-based composite oxide and the aforementioned coating layer, so that, even during repeated charging and discharging, gaps between primary particles do not widen and a shape of the secondary particles and a shape of the positive electrode can be maintained.

A thickness of the coating layer may be from about 1 nm to about 300 nm, for example, from about 30 nm to about 200 nm, or from about 50 nm to about 200 nm. The thickness of the coating layer may be measured through, for example, time-of-flight secondary ion mass spectrometry (TOF-SIMS), XPS, or energy dispersive spectroscopy (EDS) analysis, and a thickness range of the coating layer may be measured through TEM-EDS line profile. When the thickness of the coating layer satisfies the above ranges, the mechanical properties of the coating layer including the carbon nanotube may be enhanced, thereby improving the cycle-life characteristics of the positive electrode active material. In addition, if the thickness of the coating layer exceeds the above ranges, the coating layer may act as a resistance element that impedes the movement of lithium ions in the electrolyte to the positive electrode active material, resulting in a decrease in capacity.

### Method of Preparing Positive Electrode Active Material

In some embodiments, a method of preparing a positive electrode active material includes: mixing carbon nanotube, a cellulose-based dispersant, and a non-aqueous solvent to prepare a mixed solution; adding water to the mixed solution to form a Pickering emulsion; adding and mixing a lithium nickel-based composite oxide in a form of secondary particles in which primary particles are agglomerated into the Pickering emulsion to prepare a mixture; and separating a lithium nickel-based composite oxide from the mixture and heat-treating it.

First, a mixed solution is prepared by mixing a carbon nanotube, a cellulose-based dispersant, and a non-aqueous solvent.

Because the carbon nanotube may be the same as those described in the positive electrode active material, they are omitted below.

The cellulose-based dispersant may include an alkyl group, and its type is not limited as long as it contains a functional group capable of forming a hydrogen bond. The cellulose-based dispersant may include ethyl cellulose, cellulose acetate, carboxymethyl cellulose, hydroxypropyl cellulose, methyl cellulose, nitrocellulose, or a combination thereof and may be ethyl cellulose as an example. By including the cellulose-based dispersant, the carbon nanotube may be evenly dispersed without coagulation in the non-aqueous solvent. A weight ratio of the carbon nanotube and the cellulose-based dispersant may be from about 10:90 to about 90:10, from about 15:85 to about 88:12, or from about 15:85 to about 80:20. If the weight ratio of the carbon nanotube and the cellulose-based dispersant satisfies the above ranges, agglomeration of the carbon nanotube can be minimized, and the carbon nanotube can be uniformly coated on the surface of the positive electrode active material.

The non-aqueous solvent may be a solvent that does not mix with water and may include, for example, hexane, heptane, toluene, cyclohexane, isooctane, pentane, or a combination thereof.

A concentration of the carbon nanotube in the mixed solution may be from about 0.14 mg/mL to about 0.5 mg/mL, and a weight ratio of the carbon nanotube to the cellulose-based dispersant may be from about 1:1 to about 1:5. When the concentration of the carbon nanotube in the mixed solution satisfies the above range, and the weight ratio of the carbon nanotube and the cellulose-based dispersant satisfies the above range, a mixed solution in which the carbon nanotube is uniformly dispersed is prepared, minimizing agglomeration of the carbon nanotube, so that the carbon nanotube can be uniformly coated on the surface of the positive electrode active material.

By mixing the carbon nanotube, the cellulose-based dispersant with the non-aqueous solvent to prepare a mixed solution, the carbon nanotube can be well dispersed in the non-aqueous solvent by preventing the phenomenon of agglomeration by van der Waals forces through the π - □ interaction (wherein, □ = CH, OH or π) between the carbon nanotube and the cellulose-based dispersant.

Next, water is added to the mixed solution to form a Pickering emulsion.

The Pickering emulsion may be formed by a method of adding water to the mixed solution and then vortexing the mixed solution, performing sonication on the mixed solution, or performing a combination thereof.

Because the non-aqueous solvent in the mixed solution is a solvent that does not mix with water, an emulsion is formed when water is added to the mixed solution, and the carbon nanotube and cellulose-based dispersant may act as stabilizers at the interface between the non-aqueous solvent and water. The cellulose-based dispersant forms hydrogen bonds at the interface, and the carbon nanotube is physically adsorbed at the interface, which can provide stability to the emulsion. The Pickering emulsion has droplets with internal and external solvents which are determined by amounts of the solvents, wherein the internal solvent may be one solvent with a relatively smaller amount, while the external solvent may be another solvent with a relatively larger amount. Depending on types of the internal and external solvents of the droplets, there may be differences in characteristics of dispersing the carbon nanotube, in sizes of the droplets in the Pickering emulsion, in dispersion characteristics of the dispersant, in uniformity of the coating, and in the like.

In the mixed solution, a weight ratio of the non-aqueous solvent to the added water may be from about 10:1 to about 2:1, for example, from about 8:1 to about 2:1, from about 6:1 to about 2:1, or from about 4:1 to about 2:1. The non-aqueous solvent may be the external solvent of the Pickering emulsion droplet (the droplet of the Pickering emulsion), and the water may be the internal solvent of the Pickering emulsion droplet. By locating the water as the internal solvent of the Pickering emulsion droplets, when the lithium nickel-based composite oxide to be described later is introduced into the interior of the droplets along with the coating process, the washing process can proceed simultaneously due to the water located inside the droplets, thereby allowing residual lithium to be removed.

The Pickering emulsion may be present in a plurality of droplets. Each droplet may have a structure in which water is located inside the droplet and a non-aqueous solvent is located outside the droplet. In such a Pickering emulsion, the carbon nanotube and the cellulose-based dispersant may be located at the interface of between the internal solvent (water) and the external solvent (non-aqueous solvent). Accordingly, adding the water to the mixed solution to form the Pickering emulsion may include forming the Pickering emulsion in a plurality of droplets, such that the carbon nanotube and the cellulose-based dispersant are located at an interface between an internal solvent of the droplets and an external solvent of the droplets, wherein the non-aqueous solvent is the external solvent, and the water is the internal solvent.

The Pickering emulsion droplets may have an average size from about 0.5 µm to about 30 µm, for example, from about 1 µm to about 25 µm, from about 2 µm to about 20 µm, or from about 3 µm to about 15 µm. The average size of the Pickering emulsion droplets may be measured according to an optical microscope analysis method and may vary depending on the volume ratio of the non-aqueous solvent and water. When the average size of the Pickering emulsion droplets satisfies the specified range, carbon nanotube may be easily coated on the surface of lithium-nickel-based composite oxide particles and simultaneously, the lithium-nickel-based composite oxide may be incorporated and may be washed by water.

Because the method of forming the Pickering emulsion is known, specific details are omitted.

Subsequently, the lithium nickel-based composite oxide in the form of secondary particles in which the primary particles are agglomerated is added to and mixed with the Pickering emulsion to prepare a mixture.

The lithium nickel-based composite oxide in the form of secondary particles in which the primary particles are agglomerated is the same as described in the positive electrode active material and thus will not be repetitively described hereinafter.

After adding the lithium nickel-based composite oxide, mixing may be performed according to a known method, for example, by stirring or vortexing. The mixing is performed at a speed from about 100 rpm to about 2,000 rpm.

In the step of adding and mixing the lithium nickel-based composite oxide, the lithium nickel-based composite oxide is incorporated into the droplets of the Pickering emulsion, and the lithium nickel-based composite oxide incorporated into the droplets may be washed by the water inside the droplets. Residual lithium on the surface of lithium-nickel-based composite oxides may be removed through the aforementioned washing.

The lithium nickel-based composite oxide is separated from the mixture and then heat-treated.

The process of separating the lithium nickel-based composite oxide from the mixture may be performed by a vacuum filtration or a centrifuge separation and may be understood as removing the liquid phase from the mixture and separating the solid component. On the surface of the separated lithium nickel-based composite oxide, the carbon nanotube and the cellulose-based dispersant may exist.

In other words, separating the lithium nickel-based composite oxide from the mixture may be understood as separating a lithium nickel-based composite oxide inside droplets and a carbon nanotube and a cellulose-based dispersant at the interface of the droplets from the mixture, for example, separating an intermediate product, in which the carbon nanotube and the cellulose-based dispersant are adhered on the surface of the lithium nickel-based composite oxide in the form of secondary particles.

After the separation step, a drying step may be further included before the heat treatment step. In the drying step, the internal solvent of the droplets on the lithium nickel-based composite oxide surface may be removed. In addition, an external solvent of the droplets remaining on the surface during the separation may be effectively removed. The drying step may be performed separately from the heat treatment step but also may be performed along with the heat treatment step.

The heat treatment with the drying step may be performed to remove an internal solvent of droplets remaining on the surface of the separated lithium nickel-based composite oxide, and an external solvent of the droplets. The heat treatment process is compatible with the heat treatment conditions of the lithium nickel-based composite oxide and the cellulose-based dispersant. If the drying step is performed along with the heat treatment step, the heat treatment may be performed under a vacuum or predetermined gas atmosphere from about 60°C to about 800°C, about 60°C to about 600°C, about 60°C to about 400°C, about 60°C to about 200°C, about 60°C to about 180°C, about 60°C to about 160°C, about 60°C to about 140°C, about 80°C to about 140°C, about 100°C to about 140°C, or about 100°C to about 120°C. But if the drying step is performed separately from the heat treatment step, the drying may be performed from about 60°C to about 150°C, and the heat treatment may be performed under a vacuum or predetermined gas atmosphere from about 150°C to about 800°C. The predetermined gas atmosphere may include oxygen, argon, air, nitrogen, and the like, and, in the heat treatment temperature and atmosphere, water, the internal solvent of droplets remaining on the lithium nickel-based composite oxide surface, and a non-aqueous solvent, the external solvent of the droplets, may be removed, but the cellulose-based dispersant may be positioned between lithium nickel-based composite oxide and the carbon nanotube to adhere the carbon nanotube onto the lithium nickel-based composite oxide surface. If the heat treatment is performed at a temperature of carbonizing the cellulose-based dispersant, a portion of the cellulose-based dispersant may be carbonized. Even if the cellulose-based dispersant is carbonized, the cellulose-based dispersant may be positioned between the lithium nickel-based composite oxide surface and the carbon nanotube and thus may play a role of being an adhesive in a form of carbide as amorphous carbon, so that the carbon nanotube may be more strongly adhered to the lithium nickel-based composite oxide.

For the positive electrode active material prepared according to the above method, the carbon nanotube is randomly aligned on the secondary particle surface of the lithium nickel-based composite oxide to connect the primary particles and prevent misalignment of the primary particles despite repeated charging and discharging, thereby maintaining a shape of secondary particles and a positive electrode to prevent deterioration of charging and discharging cycle-life characteristics simultaneously. The positive electrode active material has less than or equal to about 1.5 wt% of a residual lithium content on the surface thereof and pH from 10 to 12 on the surface thereof by removing residual lithium, thereby suppressing a generation of gas and cycle-life degradation due to a side reaction with an electrolyte.

### Positive Electrode

According to some embodiments, a positive electrode includes a positive electrode current collector; and a positive electrode active material layer being disposed on the positive electrode current collector and including the aforementioned positive electrode active material. According to some embodiments, a positive electrode can realize high capacity while suppressing structural deterioration and crack occurrence due to charge and discharge and realizing long cycle-life characteristics.

### Positive Electrode Current Collector

The positive electrode current collector is not particularly limited as long as it has conductivity and does not cause a chemical change in the rechargeable lithium battery. The positive electrode current collector may be an aluminium foil or a stainless-steel foil having a thickness from about 10 µm to about 20 µm.

### Positive Electrode Active Material Layer

The positive electrode active material layer includes the aforementioned positive electrode active material.

The specific details of the positive electrode active material are as described above.

An amount of the positive electrode active material may be from about 60 wt% to about 99.9 wt%, from about 70 wt% to about 99.8 wt%, from about 80 wt% to about 99 wt%, from about 90 wt% to about 98 wt%, or from about 90 wt% to about 99.8 wt% based on 100 wt% of the positive electrode active material layer. When the aforementioned positive electrode active material is included, a same effect may be achieved even with a relatively small amount of conductive material compared to when a known positive electrode active material is used, and thus an energy density may be improved due to a relatively large amount of positive electrode active material.

The positive electrode active material layer may optionally further include a binder, a conductive material, or a combination thereof.

The binder improves binding properties of positive electrode active material particles with one another and with a positive electrode current collector. Examples of the binder may include polyvinyl alcohol, carboxymethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, but the binder is not limited thereto.

The conductive material is included to provide electrode conductivity, and any electrically conductive material may be used as a conductive material unless it causes a chemical change. Examples of the conductive material may include a carbon-based material such as natural graphite, artificial graphite, carbon black, acetylene black, Ketjen black, a carbon fiber, a carbon nanofiber, a carbon nanotube, and the like; a metal-based material of a metal powder or a metal fiber including copper, nickel, aluminium, silver, and the like; a conductive polymer such as a polyphenylene derivative; or a mixture thereof.

In the positive electrode active material layer, an amount of the binder may be from about 0.1 wt% to about 5 wt% based on 100 wt% of the positive electrode active material layer and an amount of the conductive material may be from about 0.1 wt% to about 5 wt% based on 100 wt% of the positive electrode active material layer.

### Rechargeable Lithium Battery

A rechargeable lithium battery according to some embodiments includes the aforementioned positive electrode, the belowmentioned negative electrode, and the belowmentioned electrolyte. The rechargeable lithium battery may include a positive electrode, a negative electrode, a separator between the positive electrode and the negative electrode, and an electrolyte.

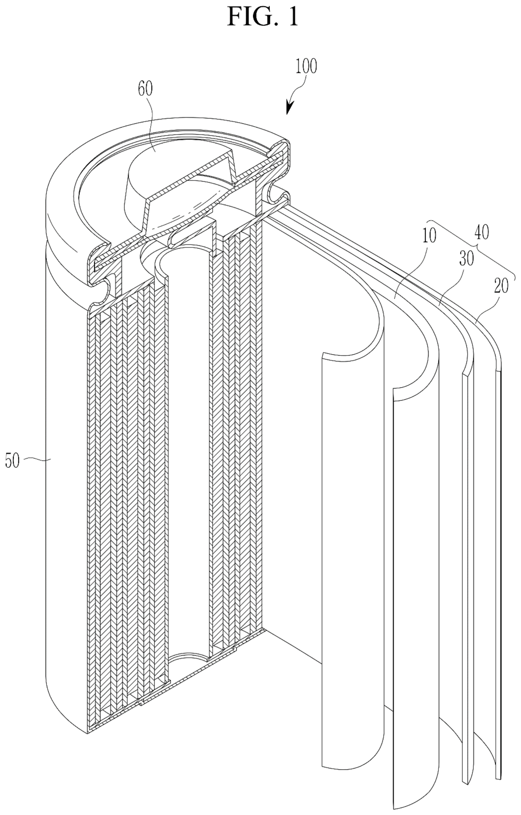

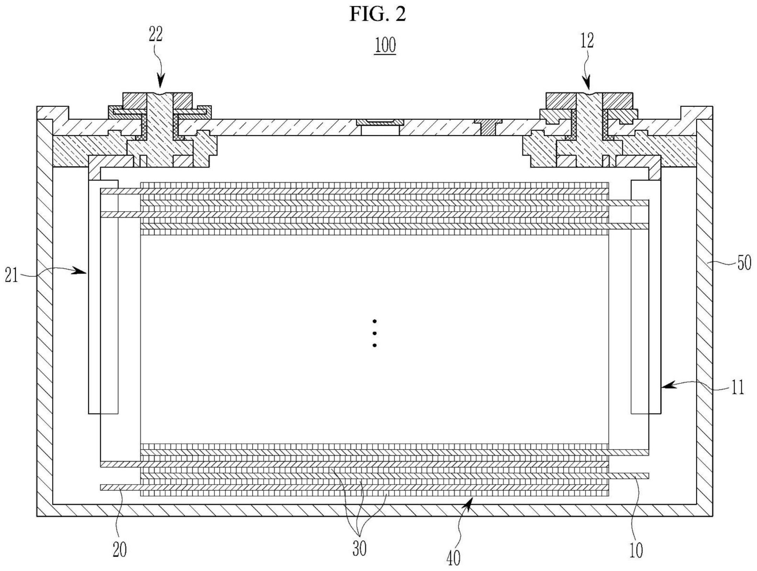

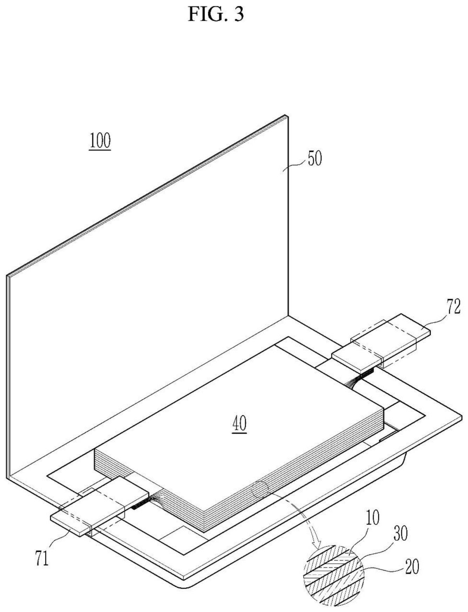

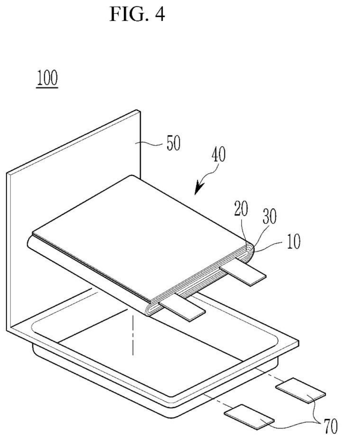

The rechargeable lithium battery may be classified into cylindrical battery, prismatic battery, pouch-shaped battery, coin battery, etc. depending on a shape thereof. FIGS. 1 to 4 are views schematically showing rechargeable lithium batteries according to some embodiments of the present disclosure, where FIG. 1 is a cylindrical battery, FIG. 2 is a prismatic battery, and FIGS. 3 and 4 are a pouch-shaped battery. The rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte (not shown). The rechargeable lithium battery 100 may include a sealer 60 that seals the case 50 as shown in FIG. 1. Additionally, as shown in FIG. 2, the rechargeable lithium battery 100 may include a positive electrode lead tab 11, a positive electrode terminal 12, a negative electrode lead tab 21, and a negative electrode terminal 22. As shown in FIGS. 3 and 4, the rechargeable lithium battery 100 includes electrode tabs 70, that is, a positive electrode tab 71 and a negative electrode tab 72 serving as an electrical path for inducing the current formed in the electrode assembly 40 to the outside.

### Negative Electrode

The negative electrode for a rechargeable lithium battery includes a negative electrode current collector and a negative electrode active material layer on the negative electrode current collector. The negative electrode active material layer includes a negative electrode active material, and may optionally further include a binder, a conductive material, or a combination thereof.

The negative electrode current collector is not particularly limited as long as it has conductivity and does not cause a chemical change in the rechargeable lithium battery. The negative electrode current collector may be a copper foil having a thickness from about 10 µm to about 15 µm.

The negative electrode active material may include a material that reversibly intercalates/deintercalates lithium ions, a lithium metal, a lithium metal alloy, a material capable of doping/dedoping lithium, or transition metal oxide.

The material that reversibly intercalates/deintercalates lithium ions may include, for example, crystalline carbon, amorphous carbon, or a combination thereof as a carbon-based negative electrode active material. The crystalline carbon may be irregular, or sheet, flake, spherical, or fiber shaped natural graphite or artificial graphite. The amorphous carbon may be a soft carbon, a hard carbon, a mesophase pitch carbonization product, calcined coke, and the like.

The material capable of doping/dedoping lithium may be a Si-based negative electrode active material or a Sn-based negative electrode active material. The Si-based negative electrode active material may include silicon, a silicon-carbon composite, SiOₓ (0<x≤2, e.g., SiO₂), a Si-Q alloy (wherein Q is an element selected from an alkali metal, an alkaline-earth metal, a Group 13 element, a Group 14 element [excluding Si], a Group 15 element, a Group 16 element, a transition metal, a rare earth element, and/or a combination thereof, for example, Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and/or a combination thereof), or a combination thereof. The Sn-based negative electrode active material may be Sn, SnOₓ (0<x≤2, e.g., SnO₂), a Sn alloy, or a combination thereof.

The silicon-carbon composite may be a composite of silicon and amorphous carbon. An average particle diameter (D₅₀) of the silicon-carbon composite particles may be, for example, from about 0.5 µm to about 20 µm. According to some embodiments, the silicon-carbon composite may be in a form of silicon particles and an amorphous carbon coated on the surface of the silicon particles. The silicon-carbon composite may include a secondary particle (core) in which silicon primary particles are agglomerated and an amorphous carbon coating layer (shell) on the surface of the secondary particle. The amorphous carbon may also be present between the silicon primary particles. For example, the silicon primary particles may be coated with amorphous carbon. The secondary particles may exist as dispersed in an amorphous carbon matrix.

The silicon-carbon composite may further include crystalline carbon. For example, the silicon-carbon composite may include a core including crystalline carbon and silicon particles and an amorphous carbon coating layer on the surface of the core. The crystalline carbon may be artificial graphite, natural graphite, or a combination thereof. The amorphous carbon may include soft carbon, hard carbon, a mesophase pitch carbonized product, and calcined coke.

When the silicon-carbon composite includes silicon and amorphous carbon, a silicon content may be from about 10 wt% to about 50 wt% and an amount of amorphous carbon may be from about 50 wt% to about 90 wt% based on 100 wt% of the silicon-carbon composite. In addition, when the silicon-carbon composite includes silicon, amorphous carbon, and crystalline carbon, a silicon content may be from about 10 wt% to about 50 wt%, an amount of crystalline carbon may be from about 10 wt% to about 70 wt%, and an amount of amorphous carbon may be from about 20 wt% to about 40 wt% based on 100 wt% of the silicon-carbon composite.

Additionally, a thickness of the amorphous carbon coating layer may be from about 5 nm to about 100 nm. An average particle diameter (D₅₀) of the silicon particles (primary particles) may be from about 10 nm to about 1 µm, or from about 10 nm to about 200 nm. The silicon particles may exist as silicon alone, in the form of a silicon alloy, or in an oxidized form of silicon. The oxidized form of silicon may be represented by SiOₓ (0<x≤2). The atomic content ratio of Si:O, which indicates a degree of oxidation, may be from about 99:1 to about 33:67. As used herein, an average particle diameter (D₅₀) indicates a diameter of a particle where a cumulative volume is about 50% volume in a particle distribution unless another definition is provided.

The Si-based negative electrode active material and/or Sn-based negative electrode active material may be mixed with the carbon-based negative electrode active material. When the Si-based negative electrode active material and/or Sn-based negative electrode active material and the carbon-based negative electrode active material are mixed and used, a mixing ratio thereof may be a weight ratio of about 1:99 to about 90:10.

The negative electrode active material may be included in an amount of about 90 wt% to about 99.8 wt%, or about 94 wt% to about 99 wt%, based on 100 wt% of the negative electrode active material layer.

The binder serves to adhere the negative electrode active material particles to each other and also to adhere the negative electrode active material to the negative electrode current collector. The binder may be a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

When an aqueous binder is used as the binder in the negative electrode active material layer, a cellulose-based compound capable of imparting viscosity may be further included. As the cellulose-based compound, one or more of carboxymethyl cellulose, hydroxypropylmethyl cellulose, methyl cellulose, and alkali metal salts thereof may be mixed and used. The alkali metal may be Na, K, or Li.

The dry binder may be a polymer material capable of becoming fiber, and may be, for example, polytetrafluoroethylene, polyvinylidene fluoride, a polyvinylidene fluoride-hexafluoropropylene copolymer, polyethylene oxide, or a combination thereof.

The conductive material is included to provide electrode conductivity, and any electrically conductive material may be used as a conductive material unless it causes a chemical change. Examples of the conductive material include a carbon-based material such as natural graphite, artificial graphite, carbon black, acetylene black, ketjen black, a carbon fiber, a carbon nanofiber, a carbon nanotube, and the like; a metal-based material of a metal powder or a metal fiber including copper, nickel, aluminium, silver, and the like; a conductive polymer such as a polyphenylene derivative; or a mixture thereof.

An amount of the binder may be from about 0.1 wt% to about 5 wt% based on 100 wt% of the negative electrode active material layer, and an amount of the conductive material may be from about 0.1 wt% to about 5 wt% based on 100 wt% of the negative electrode active material layer.

### Electrolyte

The electrolyte for a rechargeable lithium battery may be an electrolyte solution, which may include a non-aqueous organic solvent and a lithium salt.

The non-aqueous organic solvent serves as a medium for transmitting ions taking part in the electrochemical reaction of a battery. The non-aqueous organic solvent may include a carbonate-based solvent, an ester-based solvent, an ether-based solvent, a ketone-based solvent, an alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include methyl acetate, ethyl acetate, n-propyl acetate, dimethyl acetate, methyl propionate, ethyl propionate, decanolide, mevalonolactone, valerolactone, caprolactone, and the like. The ether-based solvent may include dibutyl ether, tetraglyme, diglyme, dimethoxyethane, 2-methyltetrahydrofuran, 2,5-dimethyltetrahydrofuran, tetrahydrofuran, and the like. The alcohol-based solvent may include ethanol, isopropyl alcohol, and the like, and the aprotic solvent may include nitriles such as R-CN (wherein R is a C2 to C20 linear, branched, or cyclic hydrocarbon group, and may include a double bond, an aromatic ring, or an ether bond, and the like); amides such as dimethylformamide; dioxolanes such as 1,3-dioxolane, 1,4-dioxolane, and the like; sulfolanes, and the like.

The non-aqueous organic solvent may be used alone or in a mixture of two or more types of non-aqueous organic solvents, and when two or more types are used in a mixture, a mixing ratio can be appropriately adjusted according to the desired battery performance, which is widely known to those working in the field.

When using a carbonate-based solvent, a cyclic carbonate and a chain carbonate may be mixed and used, and the cyclic carbonate and the chain carbonate may be mixed in a volume ratio from about 1:1 to about 1:9.

The non-aqueous organic solvent may further include an aromatic hydrocarbon-based organic solvent. A carbonate-based solvent and an aromatic hydrocarbon-based organic solvent may be mixed and used in a volume ratio of about 1:1 to about 30:1.

The electrolyte solution may further include vinylethylene carbonate, vinylene carbonate, or an ethylene carbonate-based compound to improve battery cycle-life.

Examples of the ethylene carbonate-based compound may include fluoroethylene carbonate, difluoroethylene carbonate, chloroethylene carbonate, dichloroethylene carbonate, bromoethylene carbonate, dibromoethylene carbonate, nitroethylene carbonate, and cyanoethylene carbonate.

The lithium salt dissolved in the non-aqueous organic solvent supplies lithium ions in a battery, enables a basic operation of a rechargeable lithium battery, and improves transportation of the lithium ions between positive and negative electrodes. Examples of the lithium salt may include at least one selected from LiPF₆, LiBF₄, LiSbF₆, LiAsF₆, LiClO₄, LiAlO₂, LiAlCl₄, LiPO₂F₂, LiCl, LiI, LiN(SO₃C₂F₅)₂, Li(FSO₂)₂N (lithium bis(fluorosulfonyl) imide; LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethane sulfonate, lithium difluorobis(oxalato) phosphate (LiDFBOP), and lithium bis(oxalato) borate (LiBOB).

A concentration of lithium salt may be within the range from about 0.1 M to about 2.0 M. When the concentration of lithium salt is within the above range, the electrolyte solution has appropriate ionic conductivity and viscosity and may, thus, achieve excellent performance and make lithium ions effectively move.

### Separator

Depending on the type of the rechargeable lithium battery, a separator may be present between the positive electrode and the negative electrode. The separator may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator may include a porous substrate and a coating layer including an organic material, an inorganic material, or a combination thereof on one or both surfaces of the porous substrate.

The porous substrate may be a polymer film formed of any one polymer selected from polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, and polytetrafluoroethylene (e.g., TEFLON) , or a copolymer or mixture of two or more thereof.

The porous substrate may have a thickness from about 1 µm to about 40 µm, for example, from about 1 µm to about 30 µm, from about 1 µm to about 20 µm, from about 5 µm to about 15 µm, or from about 10 µm to about 15 µm.

The organic material may include a (meth)acrylic copolymer including a first structural unit derived from (meth)acrylamide, and a second structural unit including at least one of a structural unit derived from (meth)acrylic acid or (meth)acrylate, and a structural unit derived from (meth)acrylamidosulfonic acid or a salt thereof.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto. An average particle diameter (D₅₀) of the inorganic particles may be from about 1 nm to about 2000 nm, for example, from about 100 nm to about 1000 nm, or from about 100 nm to about 700 nm.

The organic material and the inorganic material may be mixed in one coating layer or in a coating layer including an organic material, and a coating layer including an inorganic material may be stacked.

The thickness of the coating layer may be from about 0.5 µm to about 20 µm, for example, from about 1 µm to about 10 µm, or from about 1 µm to about 5 µm.

Examples and comparative examples of the present disclosure are described below; however, the present disclosure is not limited to the following examples.

### Example 1

### (1) Preparation of Positive Electrode Active Material

A lithium nickel-based composite oxide (LiNi_{0.91}Co_{0.08}Al_{0.01}O₂), whose secondary particles had an average particle diameter (D₅₀) of about 16 µm and whose primary particles forming the secondary particles had an average particle diameter (D₅₀) of about 400 nm, was prepared.

A multi-walled carbon nanotube having an average diameter of about 6 nm and an average aspect ratio of about 15,000 and ethyl cellulose as a cellulose-based dispersant was mixed in a weight ratio of 1:5 and then added to heptane as a non-aqueous solvent, which is not mixed with water, for preparing a mixed solution.

Subsequently, water was added to the mixed solution to form a Pickering emulsion by vortexing and sonication methods. The heptane and the water added to the mixed solution had a weight ratio of 8:1, and droplets of the Pickering emulsion had an average size of about 3 µm. At the interface of the droplets (the interface between water inside the droplets and heptane outside the droplets) of the Pickering emulsion, the ethyl cellulose as a cellulose-based dispersant and the carbon nanotube were positioned, and the water was positioned inside the droplets, while the heptane as a non-aqueous solvent was positioned outside of the droplets.

Subsequently, the lithium nickel-based composite oxide was added and mixed therewith to prepare a mixture. Based on 100 wt% of a total amount of the lithium nickel-based composite oxide, the carbon nanotube, and the ethyl cellulose, 89 wt% of the lithium nickel-based composite oxide, 2 wt% of the carbon nanotube, and 9 wt% of the ethyl cellulose were included, and the mixing was performed by vortexing. The lithium nickel-based composite oxide was incorporated into the droplets and then washed with the water positioned inside the droplets. Due to the washing process with the water, some residual lithium on the surface of the lithium nickel-based composite oxide was removed.

Subsequently, the lithium nickel-based composite oxide was separated from the mixture according to a vacuum filtration method and then heat-treated at 110 °C under a vacuum atmosphere for 2 hours, preparing a positive electrode active material. The carbon nanotube was randomly positioned on the surface of the lithium nickel-based composite oxide in the form of secondary particles in which the primary particles were agglomerated to connect the primary particles, thereby forming a coating layer, and the ethyl cellulose was positioned between the lithium nickel-based composite oxide and the carbon nanotube.

In the coating layer, the carbon nanotube was 17 wt% based on 100 wt% of the coating layer, while the ethyl cellulose was 83 wt%. In addition, the positive electrode active material surface had residual lithium of 0.23 wt% and pH of 11.84.

### (2) Manufacturing of Positive Electrode

The positive electrode active material, polyvinylidene fluoride as a binder, and carbon nanotube as a conductive material were mixed in a weight ratio of 90.2:5:4.8 (i.e., positive electrode active material:binder:conductive material), preparing a positive electrode active material composition. This positive electrode active material composition was dispersed in an N-methyl pyrrolidone solvent to prepare a positive electrode active material slurry, which was coated on a 17 µm-thick Al foil and then, dried and compressed to manufacture a positive electrode.

### (3) Manufacturing of Rechargeable Lithium Battery Cell

A lithium metal was used as a negative electrode.

A separator made of a glass fiber material was disposed between the positive electrode and the negative electrode to manufacture an electrode assembly, which was inserted into a case, and then, an electrolyte was injected into the electrode assembly, manufacturing a coin half-cell (lithium-metal half-cell). The electrolyte was prepared by mixing EC (ethylenecarbonate):EMC (ethylmethylcarbonate):DMC (dimethylcarbonate) in a volume ratio of 3:3:4, adding 3 vol% of VC (vinylene carbonate) and then dissolving 1 M LiPF₆.

### Comparative Example 1

A positive electrode active material, a positive electrode, and a rechargeable lithium battery cell were manufactured in substantially the same manner as in Example 1 except that the positive electrode active material used the lithium nickel-based composite oxide (LiNi_{0.91}Co_{0.08}Al_{0.01}O₂) prepared in Example 1 that was not added to the Pickering emulsion, such that the washing process and the coating process were not performed.

### Comparative Example 2

A positive electrode active material, a positive electrode, and a rechargeable lithium battery cell were manufactured in substantially the same manner as in Example 1 except that the positive electrode active material was prepared by forming no coating layer on the surface of the lithium nickel-based composite oxide but performing the washing process alone. Specifically, the positive electrode active material was prepared by mixing the lithium nickel-based composite oxide (LiNi_{0.91}Co_{0.08}Al_{0.01}O₂) used in Example 1 and water in a weight ratio of 1:1 and then, washing the mixture at a speed of 400 rpm for 1 minute, filtering it, and drying it at 110°C for 2 hours.

### Comparative Example 3

A positive electrode active material, a positive electrode, and a rechargeable lithium battery cell were manufactured in substantially the same manner as in Example 1 except that acetonitrile, which was not appropriate for the washing process, was added instead of the water to prepare the Pickering emulsion in preparing the positive electrode active material of Example 1.

### Evaluation Example 1: Surface Analysis of Positive Electrode Active Material

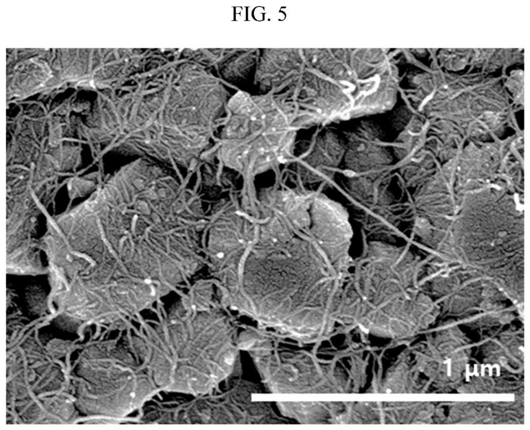

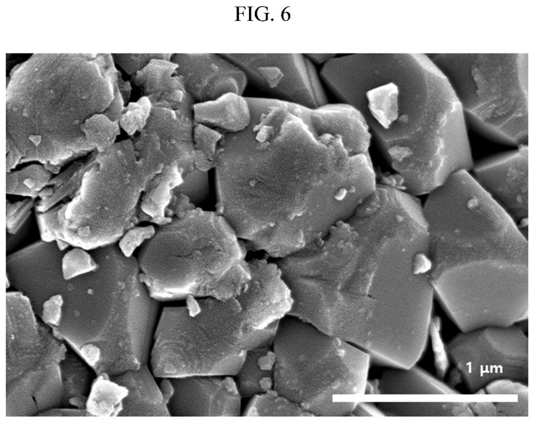

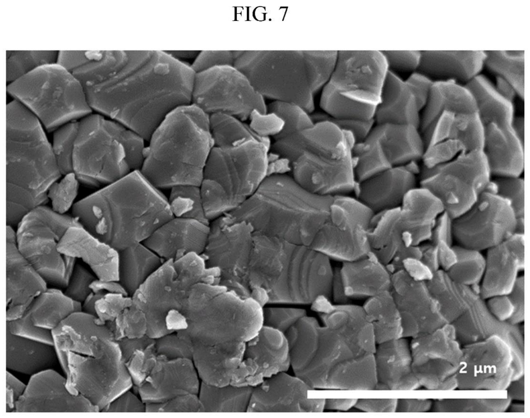

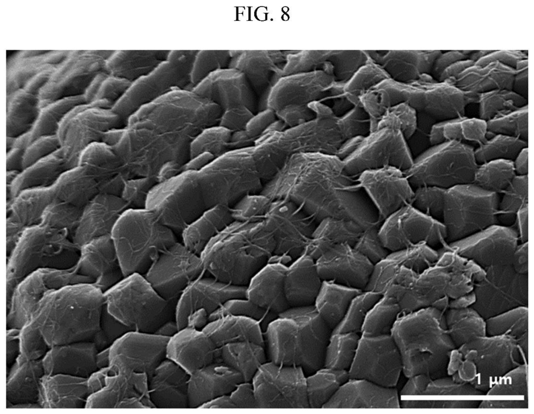

The positive electrode active materials of Example 1 and Comparative Examples 1 to 3 were respectively taken an image through field emission scanning electron microscopy (FE-SEM). FIG. 5 is a field emission scanning electron microscope (FE-SEM) photograph of surfaces of positive electrode active material particles of Example 1. FIG. 6 is a field emission scanning electron microscope (FE-SEM) photograph of surfaces of a positive electrode active material particle of Comparative Example 1. FIG. 7 is a field emission scanning electron microscope (FE-SEM) photograph of surfaces of positive electrode active material particles of Comparative Example 2. FIG. 8 is a field emission scanning electron microscope (FE-SEM) photograph of surfaces of positive electrode active material particles of Comparative Example 3. Referring to FIGS. 5 to 8, the positive electrode active materials of Example 1 and Comparative Example 3 were prepared so that the carbon nanotube connecting primary particles was randomly aligned and coated on the surface, but the positive electrode active materials of Comparative Examples 1 and 2 were prepared so that the carbon nanotube was not coated on the surface.

When a cellulose-based dispersant such as ethyl cellulose was added, the cellulose-based dispersant was positioned between the lithium nickel-based composite oxide and the carbon nanotube. The cellulose-based dispersant adhered the carbon nanotube onto the lithium nickel-based composite oxide surface.

### Evaluation Example 2: Evaluation of Residual Lithium

The positive electrode active materials of Example 1 and Comparative Examples 1 to 3 were evaluated with respect to residual lithium on the surface.

### (1) HRPD Evaluation

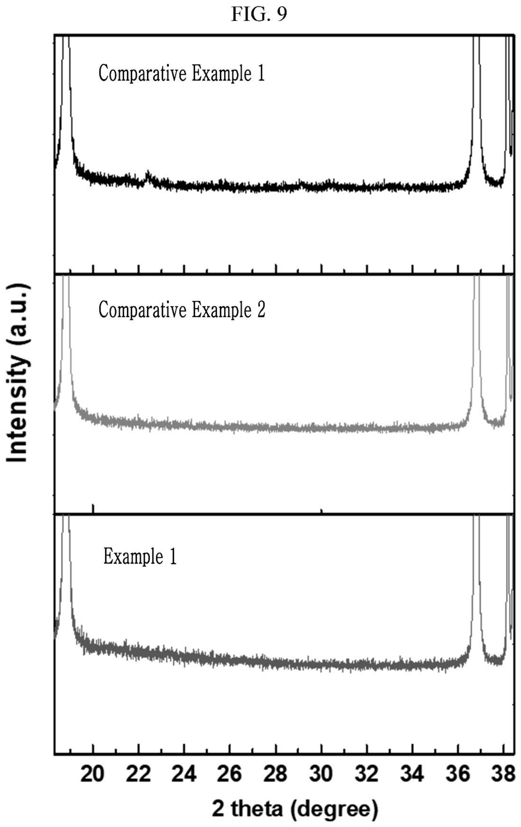

The positive electrode active materials of Example 1 and Comparative Examples 1 and 2 were subjected to high resolution X-ray powder diffraction (HRPD) analysis by using a synchrotron radiation accelerator to check whether or not a peak corresponding to residual lithium on the positive electrode active material surface was observed in a range of 15° to 135.5° under a step size condition of 0.005°, and the results are shown in FIG. 9.

FIG. 9 is a graph according to high resolution X-ray powder diffraction (HRPD) values for the positive electrode active materials of Example 1, Comparative Example 1, and Comparative Example 2.

Comparative Example 1, in which the washing process was not performed, exhibited a Li₂CO₃ peak between 22° and 32° in the X-ray diffraction pattern. This peak did not appear in Example 1 and Comparative Example 2, in which the washing process was performed, which means that the residual lithium was removed in the manufacturing process of Example 1 and Comparative Example 2.

### (2) XPS Evaluation

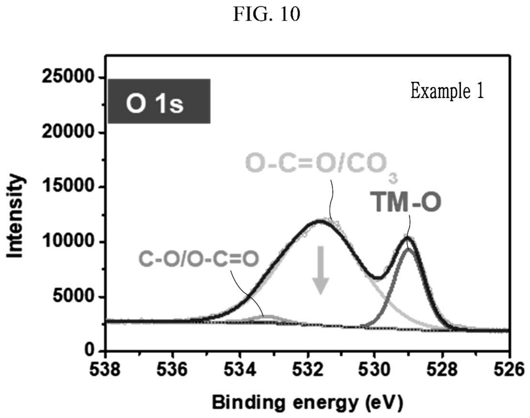

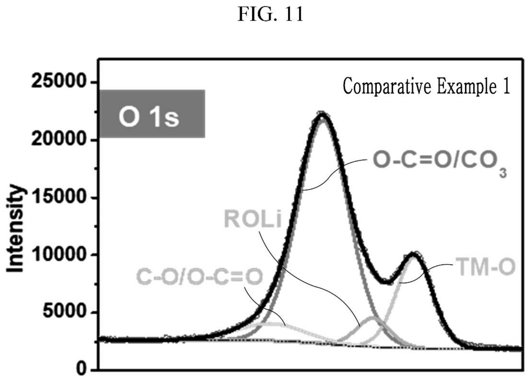

The positive electrode active materials of Example 1 and Comparative Example 1 were subjected to X-ray photoelectron spectroscopy (XPS) analysis by using Thermo Fisher Scientific K-Alpha+ XPS to examine a chemical composition on the surface. A Thermo Scientific Advantage software was used for data fitting, and the data were calibrated to an impure carbon peak with binding energy of 284.8 eV. The results are shown in FIGS. 10 and 11.

FIG. 10 is an X-ray photoelectron spectroscopy (XPS) surface analysis graph for the positive electrode active material of Example 1. FIG. 11 is an X-ray photoelectron spectroscopy (XPS) surface analysis graph for the positive electrode active material of Comparative Example 1. Example 1 and Comparative Example 1 exhibited O1s XPS spectra, in which each peak was observed at 531.6 eV (Li₂CO₃), 530.2 eV (LiOH), and 529 eV (lattice oxygen). The XPS analysis results confirmed that intensity of the 531.6 eV peak of Example 1 was significantly reduced, compared with that of Comparative Example 1, which exhibited that the residual lithium was effectively removed in Example 1.

### (3) pH Evaluation

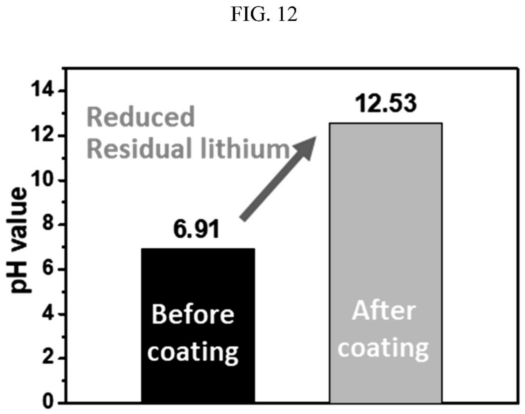

In Example 1, a pH of water used before and after the coating process was measured by using the pH meter. First, a pH of water before adding the water to a heptane solvent into which the carbon nanotube was dispersed was measured by using the pH meter. Subsequently, after completing the coating process of the carbon nanotube by using a Pickering emulsion, a pH of the filtered water was measured again with the pH meter to evaluate a pH change of the water during the coating process, and the result is shown in FIG. 12.

FIG. 12 shows results of measuring a pH of water before and after a coating process of the positive electrode active material of Example 1.

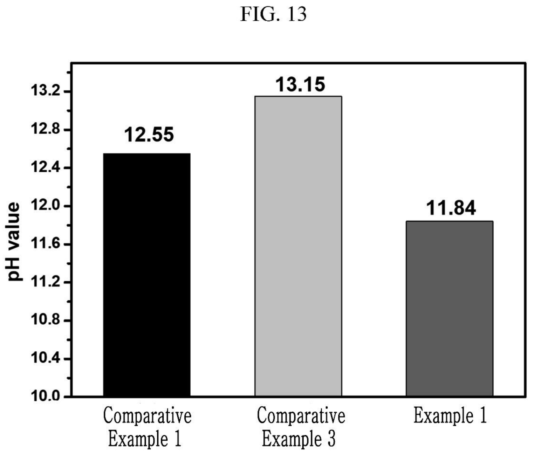

A pH of the water before addition to the Pickering emulsion coating process was 6.91, but a pH of the filtered water after the coating process was 12.53. This shows that the surface residual lithium, which mainly existed in the form of LiOH, was dissolved in the water during the coating and removed, which confirmed that the surface residual lithium was effectively removed through the coating process. In addition, after adding 2 g of each of the positive electrode active materials of Example 1 and Comparative Examples 1 and 3 to 10 mL of water and then, stirring them at a speed of 400 rpm for 10 minutes, a pH was evaluated by using the pH meter. The results are shown in FIG. 13.

FIG. 13 shows the results of measuring a pH of the positive electrode active materials prepared in Example 1, Comparative Example 1, and Comparative Example 3.

As a result of measuring a pH of the positive electrode active materials, Comparative Example 1, in which the washing process was not performed after the 10 minutes, and Comparative Example 3, which used an acetonitrile solvent that was not appropriate for the washing process, exhibited a pH, for each of the positive electrode active materials, that increased to about 12.55 and about 13.15, respectively, but Example 1 exhibited low pH of about 11.84. This suggests that the positive electrode active material of Example 1 using a water solvent, in which the residual lithium was effectively removed during the coating process, exhibited relatively low pH.

### (4) Titration Evaluation

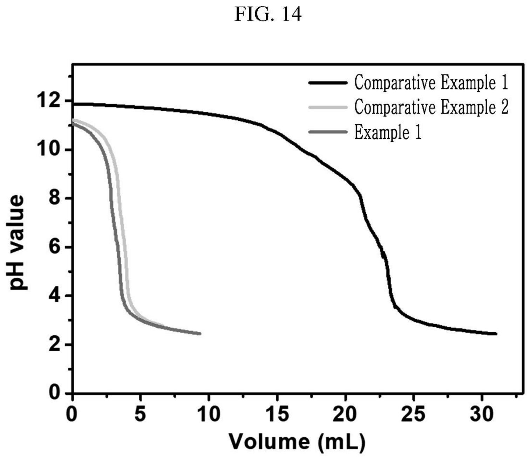

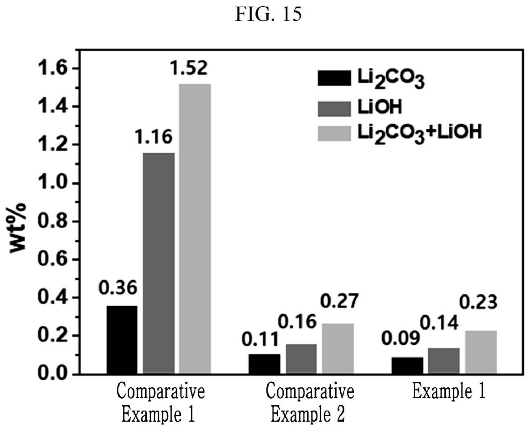

The positive electrode active materials of Example 1 and Comparative Examples 1 and 2 were measured with respect to surface residual lithium. Each of the positive electrode active materials was dissolved in water and then filtered. Then, 0.05 M HCl was added to the filtered solution by using a titrator until a pH thereof became 3, which were used to obtain a pH titration curve. An equivalence point in the obtained titration curve was substituted into a related calculation formula to calculate a residual lithium content, and the results are shown in FIGS. 14 and 15.

FIG. 14 is a titration curve graph obtained during a titration analysis process of measuring residual lithium content on surfaces of the positive electrode active materials of Example 1, Comparative Example 1, and Comparative Example 2.

Comparative Example 1 required about 25 mL of HCl to reach pH 3, but Example 1 and Comparative Example 2 respectively required only 5 mL to reach the same pH. This indicates that in the positive electrode active material of Comparative Example 1, for which no washing process was performed, lithium was more dissolved and thus, increased pH, and in order to lower this pH, additional HCl was required, and surface residual lithium was present at a considerably high concentration. On the other hand, the positive electrode active materials of Example 1 and Comparative Example 2 exhibited much lower residual lithium concentrations, which confirms that HCl was required in a significantly small amount in order to reach the same pH. FIG. 15 quantitatively exhibits these results.

FIG. 15 shows results of residual lithium content obtained by substituting equivalence points determined from titration curves of Example 1, Comparative Example 1, and Comparative Example 2 into a relevant calculation formula.

Comparative Example 1 included 1.52 wt% of residual lithium, but Example 1 and Comparative Example 2 respectively exhibited 0.27 wt% and 0.23 wt% of residual lithium. The positive electrode active material of Example 1, in which both washing process and coating process were simultaneously performed, exhibited a similar residual lithium content to that of Comparative Example 2, in which the washing process was performed without the coating process, which confirmed that in the positive electrode active material of Example 1, the washing process was performed by water present inside droplets of the Pickering emulsion, resulting in effectively removing the residual lithium.

### Evaluation Example 3

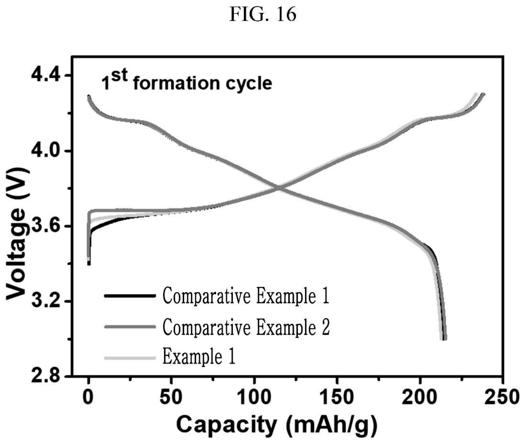

The charging and discharging cycle (formation cycle) of the activation process step for the rechargeable lithium battery cells manufactured in Example 1 Comparative Examples 1 and 2 was performed at C/10 current density (1 C = 180 mA g⁻¹) within a voltage range from 3 to 4.3 V (with reference to Li/Li⁺). The results are shown in FIG. 16.

FIG. 16 is a charge/discharge curve graph of a first activation process cycle (formation cycle) of Example 1, Comparative Example 1, and Comparative Example 2 at a rate of 0.1C.

In the first charging and discharging cycle, Comparative Examples 1 and 2 respectively exhibited discharge capacity of 214 mAh/g and 215 mAh/g, but Example 1 exhibited discharge capacity of 213 mAh/g. These results suggest that the positive electrode active material exhibited similar initial discharge capacities. An overshooting phenomenon, which in general occurs after washing or coating a high nickel-based positive electrode active material, was observed at 3.7 V during the charging.

### Evaluation Example 4

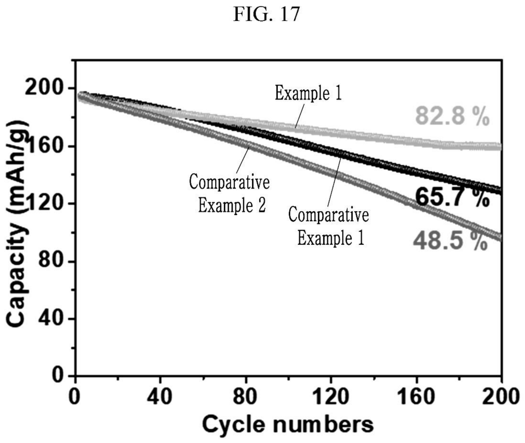

Example 1 and Comparative Examples 1 and 2 were evaluated with respect to cycle-life characteristics within a voltage range of 3 to 4.3 V (with reference to Li/Li⁺) at a 1 C-rate by charging and discharging the rechargeable lithium battery cells, and the results are shown in FIG. 17.

FIG. 17 is a graph showing an evaluation of cycle-life characteristics of Example 1, Comparative Example 1, and Comparative Example 2 at a rate of 1C for 200 cycles.

After 200 cycles of the lithium-metal half-cells at the 1 C-rate, Example 1, Comparative Examples 1 and 2 exhibited each capacity retention rate of 82.8%, 65.7%, and 48.5%. The decreased capacity retention rate observed in Comparative Example 2 may be caused from the fact that the surface of the positive electrode active material became more vulnerable after the washing process, which promotes a side reaction at the interface of the positive electrode and the electrolyte, resultantly forming a NiO phase. This shows that unstable chemical characteristics on the surface caused deterioration during the electrochemical cycles, leading to a capacity reduction. However, Example 1, which underwent a washing process by water without performing a coating process, exhibited an excellent capacity retention rate, compared with Comparative Example 2, in which the washing process was performed without the coating process, and Example 1 exhibited a much higher capacity retention rate than Comparative Example 1, which had no washing process at all. This suggests that a carbon nanotube coating layer formed in the positive electrode active material of Example 1 contributed to improving electrochemical performance. In Evaluation Examples 5 and 6, the effect of the carbon nanotube on improving electrochemical performance are specifically confirmed, through which Example 1 was confirmed to maintain a high-capacity retention rate and stable performance.

### Evaluation Example 5

Example 1 and Comparative Examples 1 and 2 were measured through electrochemical impedance spectroscopy (EIS) at 25 °C within a frequency range from 10 mHz to 100 kHz. The effect of the carbon nanotube coating on the positive electrode active materials was evaluated by comparing resistance changes after an activation process and a 50^{th} cycle.

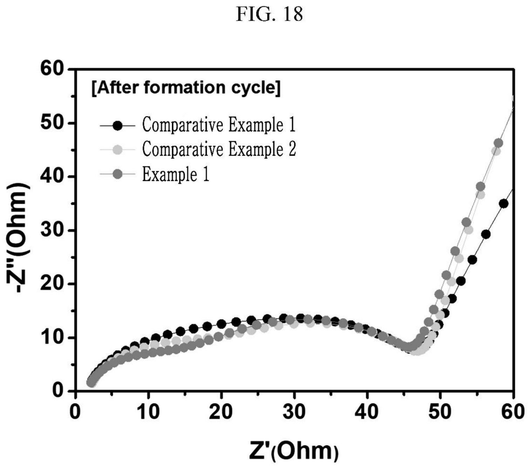

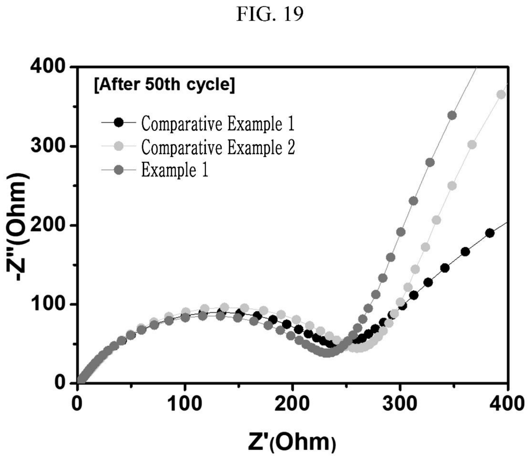

FIG. 18 shows electrochemical impedance spectroscopy (EIS) results for Example 1, Comparative Example 1, and Comparative Example 2 after an activation process. FIG. 19 shows electrochemical impedance spectroscopy (EIS) results for Example 1, Comparative Example 1, and Comparative Example 2 after 50 cycles. In FIGS. 18 and 19, "Z'" represents the real part of the impedance, and "-Z"" represents the negative imaginary part of the impedance in the Nyquist plot obtained from the EIS measurement. These results were used to derive resistance values through a fitting program, and the results are shown in Table 1. Here, Rf represents the film resistance at the electrode surface, which arises from the resistive layer formed at the interface between the electrode and the electrolyte, while Rct represents the charge transfer resistance, which corresponds to the resistance to electron transfer during the electrochemical reaction.

**Table 1:**

| Sample | After formation cycles | | After 50th cycles | |
|---|---|---|---|---|
| | Rf (Ω) | Rct (Ω) | Rf (Ω) | Rct (Ω) |
| Example 1 | 9.86 | 40.56 | 32.57 | 218.78 |
| Comparative Example 1 | 10.52 | 39.06 | 35.61 | 239.30 |
| Comparative Example 2 | 12.92 | 37.41 | 32.48 | 253.60 |

Referring to FIGS. 18 and 19 and Table 1, Example 1 exhibited lower charge transfer resistance (Rct) during the long-term cycling than Comparative Example 2. After the 50^{th} cycle, the charge transfer resistance of Example 1 gradually increased from 40.56 Ω to 218.78 Ω, but the charge transfer resistance of Comparative Example 2 increased more significantly from 37.41 Ω to 253.60 Ω. These results demonstrate that the carbon nanotube coating with excellent electrical conductivity effectively reduced the charge transfer resistance (Rct), thereby facilitating a current flow and improving conductivity within electrodes. In addition, the carbon nanotube coating alleviated deterioration of the positive electrode active materials during the long-term cycling, contributing to improving electrochemical performance.

### Evaluation Example 6

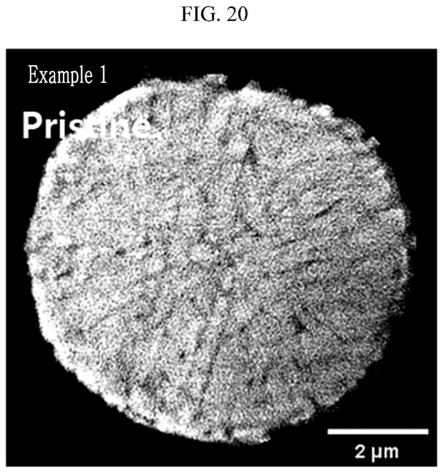

X-ray nano-tomography (TXM) images of Example 1 and Comparative Example 2 were analyzed by using a synchrotron radiation accelerator. Each tomographic image was obtained by collecting 900 projection images with an exposure time of 0.4 seconds, and the collected images were reconstructed through filtered back projection algorithm of Octopus software (TESCAN), and the results are shown in FIGS. 20 to 23.

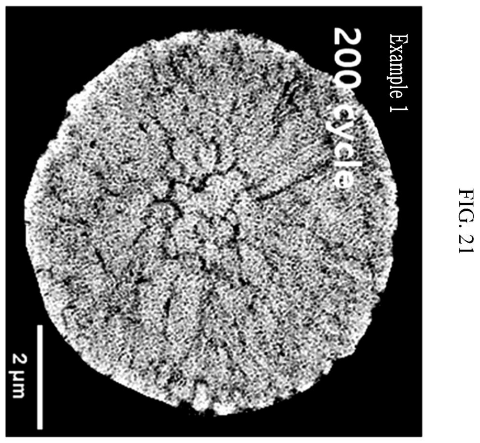

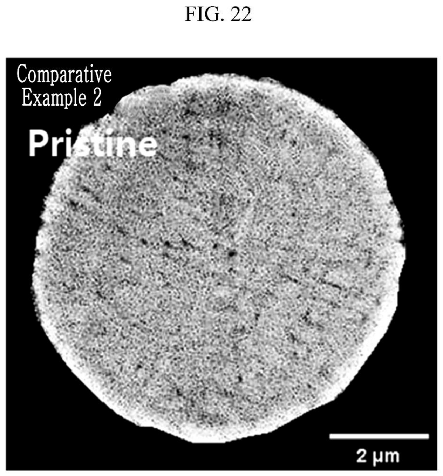

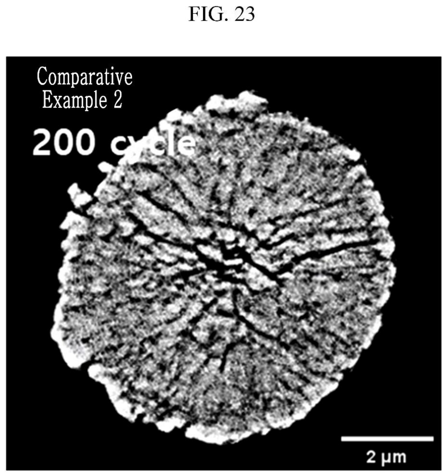

FIGS. 20 and 21 are cross-sectional images of Example 1, and FIGS. 22 and 23 are cross-sectional images of Comparative Example 2. FIG. 20 is an X-ray nano-tomography (TXM) image of Example 1 before a charge/discharge experiment. FIG. 21 is an X-ray nano-tomography (TXM) image of Example 1 after 200 cycles. FIG. 22 is an X-ray nano-tomography (TXM) image of Comparative Example 2 before a charge/discharge experiment. FIG. 23 is an X-ray nano-tomography (TXM) image of Comparative Example 2 after 200 cycles.

Referring to FIGS. 21 and 23, the cross-section of Example 1, after 200 cycles, shows that a crack formation was reduced, as opposed to that of Comparative Example 2. Accordingly, the carbon nanotube coating layer was confirmed to suppress a crack formation and to prevent a side reaction of a newly produced surface with an electrolyte, improving electrochemical performance of the electrode.

While this invention has been described in connection with what is presently considered to be practical embodiments, it is to be understood that the invention is not limited to the disclosed embodiments above, but, on the contrary, is intended to cover various modifications and equivalent arrangements understood by one skilled in the relevant art.

### <Description of Symbols>

100: rechargeable lithium battery
10: positive electrode
11: positive electrode lead tab
12: positive electrode terminal
20: negative electrode
21: negative electrode lead tab
22: negative electrode terminal
30: separator
40: electrode assembly
50: case
60: sealer
70: electrode tab
71: positive electrode tab
72: negative electrode tab

## Claims

1. A positive electrode active material comprising:
a lithium nickel-based composite oxide in a form of secondary particles in which a plurality of primary particles is agglomerated; and
a coating layer on a surface of one or more of the secondary particles and comprising a cellulose derivative and a carbon nanotube,
wherein the carbon nanotube in the coating layer is randomly arranged on the surface of the one or more of the secondary particles and connects between the primary particles,
wherein a residual lithium content on a surface of the positive electrode active material is less than or equal to 1.5 wt%, and
wherein a pH of the surface of the positive electrode active material is 10 to 12.

2. The positive electrode active material as claimed in claim 1, wherein the lithium nickel-based composite oxide is represented by Chemical Formula 1:
Liₐ₁Niₓ₁M¹_{y1}M²_{z1}O_{2-b1}X_{b1},
and
wherein, in Chemical Formula 1, 0.9≤a1≤1.2, 0.8≤x1<1, 0<y1≤0.2, 0≤z1≤0.2, 0.9≤x1+y1+z1≤1.1, and 0≤b1≤0.1,
wherein M¹ and M² are each independently one or more elements selected from Al, B, Ba, Ca, Ce, Co, Cr, Cu, Fe, Mg, Mn, Mo, Nb, Si, Sn, Sr, Ti, V, W, Y, Zn, and Zr, and
wherein X is one or more elements selected from F, P, and S.

3. The positive electrode active material as claimed in claim 1 or claim 2, wherein, in the lithium nickel-based composite oxide, a nickel content based on 100 mol% of a total metal, excluding lithium, is greater than or equal to about 80 mol%.

4. The positive electrode active material as claimed in any one of claims 1 to 3, wherein an average particle diameter (D₅₀) of the secondary particles is from about 2 µm to about 20 µm, and
wherein an average particle diameter (D₅₀) of the primary particles is less than or equal to about 6 µm.

5. The positive electrode active material as claimed in any one of claims 1 to 4, wherein the cellulose derivative is disposed between the lithium nickel-based composite oxide and the carbon nanotube.

6. The positive electrode active material as claimed in any one of claims 1 to 5, wherein the cellulose derivative comprises ethyl cellulose, cellulose acetate, carboxylmethyl cellulose, hydroxypropyl cellulose, methyl cellulose, nitrocellulose, or a combination thereof.

7. The positive electrode active material as claimed in any one of claims 1 to 6, wherein the cellulose derivative is included in an amount from about 0.005 wt% to about 50 wt% based on 100 wt% of the positive electrode active material, and
wherein the cellulose derivative is included in an amount of about 0.5 wt% to 90 wt% based on 100 wt% of the coating layer.

8. The positive electrode active material as claimed in any one of claims 1 to 7, wherein the coating layer further comprises amorphous carbon,
wherein the amorphous carbon comprises a carbide of the cellulose derivative, and
wherein the carbide of the cellulose derivative comprises a carbide of ethyl cellulose, a carbide of cellulose acetate, a carbide of carboxymethyl cellulose, a carbide of hydroxypropyl cellulose, a carbide of methyl cellulose, a carbide of nitrocellulose, or a combination thereof, optionally wherein the amorphous carbon is disposed between the lithium nickel-based composite oxide and the carbon nanotube.

9. The positive electrode active material as claimed in any one of claims 1 to 8, wherein:
(i) the carbon nanotube comprises a single-walled carbon nanotube, a multi-walled carbon nanotube, or a combination thereof; and/or
(ii) an average diameter of the carbon nanotube is from about 1 nm to about 50 nm, and wherein an average aspect ratio of the carbon nanotube is from about 100 to about 50,000; and/or
(iii) the carbon nanotube is included in an amount from about 0.01 wt% to about 10 wt% based on 100 wt% of the positive electrode active material, and
wherein the carbon nanotube is included in an amount from about 10 wt% to 99.5 wt% based on 100 wt% of the coating layer.

10. A method of preparing a positive electrode active material, the method comprising:
mixing a carbon nanotube, a cellulose-based dispersant, and a non-aqueous solvent to prepare a mixed solution;
adding water to the mixed solution to form a Pickering emulsion;
adding and mixing a lithium nickel-based composite oxide in a form of secondary particles in which primary particles are agglomerated into the Pickering emulsion to prepare a mixture;
separating the lithium nickel-based composite oxide from the mixture; and
heat-treating the mixture.

11. The method as claimed in claim 10, wherein:
(i) mixing the cellulose-based dispersant with the carbon nanotube and the non-aqueous solvent for preparing the mixed solution includes mixing ethyl cellulose, cellulose acetate, carboxymethyl cellulose, hydroxypropyl cellulose, methyl cellulose, nitrocellulose, or a combination thereof with the carbon nanotube and the non-aqueous solvent; and/or
(ii) mixing the non-aqueous solvent with the carbon nanotube and the cellulose-based dispersant for preparing the mixed solution includes mixing hexane, heptane, toluene, cyclohexane, isooctane, pentane, or a combination thereof with the carbon nanotube and the cellulose-based dispersant.

12. The method as claimed in claim 10 or claim 11, wherein:
adding the water to the mixed solution to form the Pickering emulsion includes forming the Pickering emulsion in a plurality of droplets, such that the carbon nanotube and the cellulose-based dispersant are located at an interface between an internal solvent of the droplets and an external solvent of the droplets, wherein the non-aqueous solvent is the external solvent, and the water is the internal solvent,
optionally further comprising, when the adding and mixing the lithium nickel-based composite oxide to prepare the mixture, incorporating the lithium nickel-based composite oxide into the droplets of the Pickering emulsion, wherein the lithium nickel-based composite oxide incorporated into the droplets is washed by the water inside the droplets.

13. The method as claimed in any one of claims 10 to 12, further comprising performing the heat treatment at a temperature from about 60 °C to about 800 °C under a vacuum or a predetermined gas atmosphere, the predetermined gas atmosphere including oxygen, argon, air, or nitrogen.

14. A positive electrode comprising:
a positive electrode current collector; and
a positive electrode active material layer disposed on the positive electrode current collector and including the positive electrode active material as claimed in any one of claims 1 to 9.

15. A rechargeable lithium battery comprising the positive electrode as claimed in claim 14, a negative electrode, and an electrolyte.
